(19) Europäisches Patentamt
European Patent Office
Office européen des brevets

(11) Veröffentlichungsnummer: **0 455 587 B1**

# (12) EUROPÄISCHE PATENTSCHRIFT

(45) Veröffentlichungstag der Patentschrift: **19.07.95**

(51) Int. Cl.$^6$: **C08F 230/08**, C08F 220/22, G02B 1/04

(21) Anmeldenummer: **91810301.1**

(22) Anmeldetag: **23.04.91**

## (54) Neue Polymere und harte, gasdurchlässige Kontaktlinsen daraus.

(30) Priorität: **02.05.90 CH 1479/90**

(43) Veröffentlichungstag der Anmeldung:
**06.11.91 Patentblatt 91/45**

(45) Bekanntmachung des Hinweises auf die Patenterteilung:
**19.07.95 Patentblatt 95/29**

(84) Benannte Vertragsstaaten:
**AT BE CH DE DK ES FR GB GR IT LI LU NL SE**

(56) Entgegenhaltungen:
**EP-A- 0 184 924**
**EP-A- 0 277 771**
**US-A- 4 766 189**

(73) Patentinhaber: **CIBA-GEIGY AG**
**Klybeckstrasse 141**
**CH-4002 Basel (CH)**

(72) Erfinder: **Gruber, Erich, Prof. Dr.**
**Rte de l'Union 4**
**CH-1723 Marly (CH)**
Erfinder: **Schäfer, Horst, Dr.**
**Wiesenau 2**
**W-8750 Aschaffenburg 19 (DE)**
Erfinder: **Seiferling, Bernard, Dr.**
**Dr. Wohlfahrtstrasse 6**
**W-8752 Goldbach (DE)**
Erfinder: **Mueller von der Haegen, Harro, Dr.**
**Bergstrasse 23**
**W-8752 Laufach (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft neue Polymere, Verfahren zu deren Herstellung, Kontaktlinsen bestehend im wesentlichen aus diesen Polymeren und Verfahren zu deren Herstellung sowie die Verwendung der neuen Polymere zur Herstellung von Kontaktlinsen. Die neuen Polymere bzw. Kontaktlinsen daraus zeichnen sich durch hohe Härte bei gleichzeitig hoher Sauerstoffdurchlässigkeit aus. Diese vorteilhaften Materialeigenschaften werden dadurch erreicht, dass zur Herstellung der Polymere eine hydrophobe Monomerkomponente mit einem sperrigen Kohlenwasserstoffrest zusammen mit einer Siloxanmonovinylkomponente, einer Siloxanoligovinylkomponente, einer fluorhaltigen Vinylkomponente sowie wahlweise einer hydrophilen Vinylkomponente und/oder einer zusätzlichen vernetzenden Vinylkomponente verwendet wird.

Es ist bereits vorgeschlagen worden, Kontaktlinsen aus Polymeren herzustellen, die eine Siloxanmonovinylkomponente, Polysiloxandimethacrylate, Fluoralkylmethacrylate und hydrophile Vinylmonomere enthalten, z.B. in der EP-A-277,771 oder der WO 88/05060. Es wurde auch bereits vorgeschlagen, Polymere auf der Basis von Siloxanmonovinylkomponenten, Fluoralkylmethacrylaten, hydrophoben Alkyl- oder Cycloalkylmethacrylaten und hydrophilen Vinylmonomeren zur Herstellung von Kontaktlinsen zu verwenden, z.B. in der EP 294,515 oder den US-PS-4,540,761 und 4,433,125.

Soweit hierbei als hydrophobes Vinylmonomer nicht das geradezu klassische Methylmethacrylat verwendet wird, werden in den genannten Druckschriften beispielsweise Monomere wie tert.-Butylmethacrylat, 2-Ethylhexylmethacrylat oder Cyclohexylmethacrylat genannt.

Es wurde offensichtlich bisher nicht erkannt, dass die Verwendung spezieller hydrophober Monomerkomponenten mit einem sperrigen Kohlenwasserstoffrest, wie nachstehend definiert, besonders vorteilhaft ist. Dies gilt insbesondere, wenn jene Monomere mit sperrigem Kohlenwasserstoffrest in Kombination mit je einem oder mehreren Vertretern der Art Siloxanmonovinylkomponente, Siloxanoligovinylkomponente und fluorhaltige Vinylkomponente copolymerisiert werden. Dabei können spezielle Materialeigenschalten noch zusätzlich günstig beeinflusst werden, wenn eine hydrophile Vinylkomponente und/oder eine zusätzliche vernetzende Komponente dem zu polymerisierenden Gemisch beigegeben werden.

Bedeutsam an der vorliegenden Erfindung ist, dass die hydrophobe Komponente mit sperrigem Kohlenwasserstoffrest zusammen mit den drei anderen obligatorischen Komponenten einen bisher nicht beobachteten Synergieeffekt bewirkt, der den erfindungsgemäss erhältlichen Polymeren sowohl hohe Härte als auch hohe Sauerstoffdurchlässigkeit verleiht.

So weist ein 1:1-Copolymer aus einer typischen Komponente mit sperrigem Kohlenwasserstoffrest und Methylmethacrylat (MMA) eine Sauerstoffdurchlässigkeit (Dk-Wert) von 11 auf und eine Kugeldruckhärte (KDH) von 177. Wird MMA durch eine typische fluorhaltige Komponente ersetzt, ändert sich der Dk-Wert praktisch nicht, die Kugeldruckhärte sinkt hingegen ab. Verwiesen wird hierzu auf die Vergleichsbeispiele 1-3.

Der bekannte positive Effekt von Siloxangruppen und fluorhaltigen Gruppen auf die Eigenschaften von Kontaktlinsen beschränkt sich auf eine Erhöhung der Dk-Werte, wirkt sich jedoch nicht förderlich auf die Härte aus.

Hingegen weisen die erfindungsgemässen Polymere Kugeldruckhärten auf, die eine mechanische Bearbeitung in der erforderlichen Weise zulassen, und sie haben gleichzeitig hohe Dk-Werte. Gegenüber Polymeren, die statt der hydrophoben Vinylkomponente mit sperrigem Kohlenwasserstoffrest Methylmethacrylat enthalten, nimmt bei sonst gleicher Zusammensetzung der Dk-Wert bei gleicher Härte überproportional zu. Verwiesen wird hierzu auf die Beispiele 1-3 (erfindungsgemässe Polymere) und die Vergleichsbeispiele 4-7, in denen MMA verwendet wird. So weist z.B. das Paar Beispiel 1/Vergleichsbeispiel 4 eine vergleichbare Härte auf (nämlich 74 bzw. 78), jedoch liegt der Dk-Wert des MMA-Copolymeren bei 34, derjenige des erfindungsgemässen Copolymeren hingegen bei 57. Entsprechendes gilt für die Paare Beispiel 2/Vergleichsbeispiel 5 und Beispiel 3/Vergleichsbeispiel 6.

Die Erfindung betrifft daher Polymere, bei denen es sich um die Copolymerisationsprodukte von Monomermischungen handelt, die folgende Monomere enthalten:

a) 20-60 Gew.% Siloxanmonovinylkomponente
b) 1-25 Gew.% Siloxanoligovinylkomponente
c) 10-55 Gew.% fluorhaltige Vinylkomponente
d) 3-30 Gew.% hydrophobe Vinylkomponente mit sperrigem Kohlenwasserstoffrest
e) 0-10 Gew.% hydrophile Vinylkomponente
f) 0-15 Gew.% zusätzliche vernetzende Vinylkomponente,

wobei es sich bei der hydrophoben Vinylkomponente mit sperrigem Kohlenwasserstoffrest um eine Verbindung der Formel IVa handelt

$Ac\text{-}O\text{-}R^{14}$

worin Ac der Acylrest einer vinylisch ungesättigten Carbonsäure mit 3-5 Kohlenstoffatomen ist und $R^{14}$ durch Niederalkyl substituiertes Cycloalkyl, durch Niederalkyl substituiertes Cycloalkylniederalkyl, unsubstituiertes oder durch Niederalkyl substituiertes Di- oder Oligocycloalkyl, unsubstituiertes oder durch Niederalkyl substituiertes Di- oder Oligocycloalkyl-niederalkyl oder mindestens eine tert.-Butylgruppe enthaltendes $C_5$-$C_{10}$-Alkyl bedeutet, welches unsubstituiert oder durch Cycloalkyl substituiert ist,
oder um eine Verbindung der Formel IVb

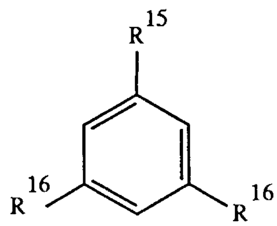

worin $R^{15}$ $C_2$-$C_6$-Alkenyl mit der Doppelbindung in Konjugation zum Phenylring bedeutet und $R^{16}$ für Wasserstoff steht oder die Bedeutung von $R^{14}$ hat, wobei jedoch mindestens ein $R^{16}$ von Wasserstoff verschieden ist.

Bevorzugte Ausführungsformen sind in den Ansprüchen 2 bis 15 offenbart. Der Begriff "Vinyl" bedeutet im Zusammenhang mit dieser Erfindung nicht ausschliesslich die Gruppierung "$-CH=CH_2$". Stattdessen umfasst dieser Begriff olefinisch ungesättigte copolymerisierbare Gruppen, wie sie in Monomeren, die für Kontaktlinsen verwendet werden, typischerweise auftreten. "Vinyl" umfasst daher, ohne dass diese Aufzählung abschliessend wäre, die entsprechenden Reste von Acryl- und Methacrylsäurederivaten, ebenso diejenigen von Derivaten der Crotonsäure, Fumarsäure, Maleinsäure oder Itaconsäure.

Insbesondere betrifft die Erfindung Polymere, bei denen es sich um die Copolymerisationsprodukte von Monomermischungen handelt, die folgende Monomere enthalten:

a) eine Siloxanmonovinylkomponente der Formel I

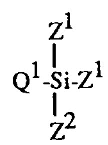

worin $Q^1$ für den Rest der Teilformel

$Ac\text{-}O\text{-}R^1\{A\text{-}R^2\text{-}A'\text{-}R^3\}_n$

steht, Ac der Acylrest einer vinylisch ungesättigten Carbonsäure mit 3-5 Kohlenstoffatomen ist, $R^1$ und $R^2$ unabhängig voneinander Niederalkylen, Cycloalkylen, Arylen oder eine Kombination von Niederalkylen mit Cycloalkylen oder Niederalkylen mit Arylen bedeuten, $R^3$ für Niederalkylen oder Cycloalkylen steht, A und A' unabhängig voneinander $X^1$-CO-$X^2$ bedeuten, wobei jeweils $X^2$ an $R^2$ gebunden ist, und $X^2$ für -NH- oder eine Bindung und $X^1$ für -O-, oder -NR-, worin R Niederalkyl bedeutet, stehen, worin die Reste $Z^1$ unabhängig voneinander $OSi(R^4)_3$ bedeuten, worin $R^4$ unabhängig voneinander für Niederalkyl, Phenyl oder $OSi(\text{Niederalkyl})_3$ steht, $Z^2$ Niederalkyl, Phenyl oder $Z^1$ bedeutet und n den Wert 0 oder 1 hat,

b) eine Siloxanoligovinylkomponente der Formel II

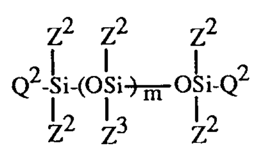

worin $Q^2$ die Bedeutung von $Q^1$ hat oder für Ac-O steht, worin $Q^1$, Ac und $Z^2$ wie vorstehend definiert sind, $Z^3$ für $Z^2$ steht oder die Bedeutung von $Q^2$ hat und m den Wert 0 bis 4 aufweist,
c) eine fluorhaltige Vinylkomponente der Formel IIIa

$Ac-O-R^5-R^6$

worin Ac wie vorstehend definiert ist, $R^5$ für $C_1$-$C_4$-Alkylen oder Cycloalkylen steht, $R^6$ fluoriertes Niederalkyl mit mindestens 3 Fluoratomen bedeutet oder worin $R^5$-$R^6$ zusammen für Hexafluorisopropyl oder Nonafluor-tert.-butyl steht,
oder der Formel IIIb

$Ac-O-R^5-R^7-R^5-O-Ac$

worin Ac und $R^5$ wie vorstehend definiert sind und $R^7$ fluoriertes $C_1$-$C_{10}$-Alkylen bedeutet,
oder der Formel IIIc

$Ac-O-R^8-C(CF_3)_2-R^8-O-Ac$

worin Ac wie vorstehend definiert ist und $R^8$ für unsubstituiertes oder durch Niederalkyl, Fluor oder fluoriertes Niederalkyl mit mindestens 3 Fluoratomen substituiertes Phenylen steht,
oder der Formel IIId

$R^9-(CH_2)_p-CH(OAc)-CH_2-OAc$

worin Ac wie vorstehend definiert ist, $R^9$ perfluoriertes $C_1$-$C_{10}$-Alkyl bedeutet und p den Wert 0, 1 oder 2 hat,
oder der Formel IIIe

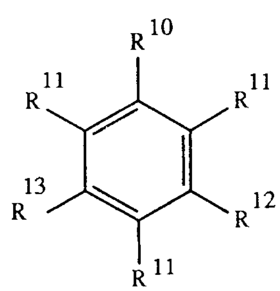

worin $R^{10}$ $C_2$-$C_6$-Alkenyl mit der Doppelbindung in Konjugation zum Phenylring bedeutet, die Reste $R^{11}$ unabhängig voneinander Wasserstoff oder Fluor bedeuten, $R^{12}$ für fluoriertes Niederalkyl mit mindestens 3 Fluoratomen steht und $R^{13}$ Wasserstoff oder Fluor ist oder die Bedeutung von $R^{12}$ hat, und
d) eine hydrophobe Vinylkomponente mit sperrigem Kohlenwasserstoffrest der Formel IVa oder der Formel IVb wie vorstehend definiert.

Weitere Komponenten, die wahlweise anwesend sein können, werden nachstehend definiert.

Vor und nachstehend bedeutet "Nieder" im Zusammenhang mit Substituenten oder Resten, wie z.B. Niederalkyl, eine Gruppe mit bis zu 7 Kohlenstoffatomen, bevorzugt mit bis zu 4 Kohlenstoffatomen.

Der Acylrest "Ac" einer vinylisch ungesättigten Carbonsäure mit 3 bis 5 Kohlenstoffatomen weist bevorzugt 3 oder 4 Kohlenstoffatome auf und ist z.B. Acryloyl, Methacryloyl, Crotonoyl, der Acylrest einer vinylisch ungesättigten Dicarbonsäure, wie Maleinsäure, Fumarsäure oder Itaconsäure, wobei in den Acylresten von Dicarbonsäuren die zweite Carbonsäuregruppe entweder frei ist oder, vorzugsweise, mit einem Niederalkanol verestert ist. Bevorzugte Acylreste "Ac" sind Acryloyl und Methacryloyl, insbesondere Methacryloyl.

Niederalkylen $R^1$ und $R^2$ hat bis zu 7 Kohlenstoffatome, bevorzugt bis zu 4 Kohlenstoffatome und steht z.B. für Methylen, Ethylen, 1,3-Propylen, 1,2-Propylen, 1,4-Butylen oder 1,6-Hexylen.

Cycloalkylen $R^1$ und $R^2$ hat 5 bis 7 Ringkohlenstoffatome, ist unsubstituiert oder durch Carboxy oder Niederalkyl substituiert, und ist z.B. Cyclopentylen, Carboxycyclopentylen, Cyclohexylen, Cycloheptylen,

Methylcyclohexylen, Dimethylcyclohexylen oder Trimethylcyclohexylen.

Arylen $R^1$ und $R^2$ hat z.B. 6 oder 12 Ringkohlenstoffatome, wie Phenylen, Biphenylen oder Naphthylen, ist unsubstituiert oder durch Niederalkyl, Halogen oder Niederalkoxy substituiert und ist beispielsweise Phenylen, Methylphenylen oder tert.-Butylphenylen, Biphenylen, Dimethoxybiphenylen, Dimethylbiphenylen, Naphthylen oder Methylnaphthylen.

Halogen ist insbesondere Brom oder Chlor, kann aber auch für Fluor oder Iod stehen.

Niederalkoxy hat insbesondere bis zu 7 Kohlenstoffatome und ist z.B. Methoxy, Ethoxy oder Propoxy.

Falls $R^1$ und $R^2$ für eine Kombination von Niederalkylen mit Cycloalkylen oder mit Arylen stehen, bedeuten diese Reste z.B. Niederalkylen-Cycloalkylen, Niederalkylen-Cycloalkylen-Niederalkylen, Cycloalkylen-Niederalkylen-Cycloalkylen, Niederalkylen-Arylen oder Niederalkylen-Arylen-Niederalkylen. Beispiele hierfür sind Methylen-Cyclohexylen oder Cyclohexylen-Methylen, unsubstituiert oder durch 1 bis 3 Niederalkylgruppen substituiert, wie z.B. Trimethyl-Cyclohexylen-Methylen, Methylen-Cyclohexylen-Methylen, Phenylen-Methylen, Phenylen-Ethylen, Methylen-Phenylen-Methylen oder Butylen-Phenylen-Butylen.

Niederalkylen und Cycloalkylen $R^3$ hat die vorstehend für $R^1$ und $R^2$ angegebenen Bedeutungen.

$R^1$ und $R^3$ sind bevorzugt Niederalkylen, insbesondere Niederalkylen mit 2 oder 3 Kohlenstoffatomen.

$R^2$ ist bevorzugt Arylen, Cycloalkylen oder eine Kombination eines dieser beiden Reste mit Niederalkylen, wie vorstehend definiert.

Die Teilstruktur $-CO-X^2-R^2-X^2-CO-$ steht bevorzugt für den divalenten Rest eines Diisocyanats ($X^2$ = NH) oder eines Diesters ($X^2$ ist eine Bindung). Die Bedeutung -NH-für $X^2$ ist bevorzugt. Geeignete Isocyanate, die die Teilstruktur $-CO-X^2-R^2-X^2-CO-$liefern, worin $X^2$ für -NH- steht, sind z.B. Ethylendiisocyanat, 1,2-Diisocyanatopropan, 1,3-Diisocyanatopropan, 1,6-Diisocyanatohexan, 1,2-Diisocyanatocyclohexan, 1,3-Diisocyanatocyclohexan, 1,4-Diisocyanatocyclohexan, o-Diisocyanatobenzol, m-Diisocyanatobenzol, p-Diisocyanatobenzol, Bis-(4-isocyanatocyclohexyl)-methan, Bis-(4-isocyanatocyclohexenyl)-methan, Bis-(4-isocyanatophenyl)-methan, Toluylendiisocyanat, 3,3-Dichlor-4,4'-diisocyanatobiphenyl, Tris-(4-isocyanatophenyl)-methan, hydriertes Toluylendiisocyanat, 1-Isocyanatomethyl-5-isocyanato-1,3,3-trimethylcyclohexan (= Isophorondiisocyanat), 1,3,5-Tris-(6-isocyanatohexyl)-biuret, 1,6-Diisocyanato-(2,2,4)-trimethylhexan, 2,2'-Diisocyanatodiethylfumarat, 1,5-Diisocyanato-1-carboxypentan, 1,2-, 1,3-, 1,5-, 1,6-, 1,7-, 1,8-, 2,7- und 2,3-Diisocyanatonaphthalin, 2,4- und 2,7-Diisocyanato-1-methylnaphthalin, 1,4-Diisocyanato-methylcyclohexan, 1,3-Diisocyanato-6(7)-methylnaphthalin, 4,4'-Diisocyanatobiphenyl, 4,4'-Diisocyanato-3,3'-dimethoxybiphenyl, 3,3'- und 4,4'-Diisocyanato-2,2'-dimethylbiphenyl, Bis-(4-isocyanatophenyl)-ethan und Bis-(4-isocyanatophenyl)-ether. Bevorzugte Diisocyanate sind Tolylen-2,4-diisocyanat und Isophorondiisocyanat.

Niederalkyl $R^4$ oder innerhalb der Bedeutung $OSi(Niederalkyl)_3$ von $R^4$ oder Niederalkyl $Z^2$ ist z.B. Methyl, Ethyl, Propyl oder Butyl, bevorzugt Methyl.

$Z^1$ ist vorzugsweise Trimethylsilyloxy oder Tris(trimethylsilyloxy)silyloxy. $Z^2$ hat vorzugsweise die Bedeutung von $Z^1$. Der Index n ist vorzugsweise 0.

$Q^2$ ist vorzugsweise $Q^1$, worin n für 0 steht. Der Index m bedeutet insbesondere 0.

$R^5$ ist $C_1$-$C_4$-Alkylen oder Cycloalkylen mit 5, 6 oder 7 Ringgliedern, z.B. Methylen, Ethylen, Propylen oder Cyclohexylen, bevorzugt Methylen.

Fluoriertes Niederalkyl mit mindestens 3 Fluoratomen $R^6$ ist beispielsweise Trifluormethyl, Heptafluorpropyl, Nonafluor-tert.-butyl, $\omega$-H-Tetrafluorethyl oder $\omega$-H-Octafluorbutyl.

Fluoriertes $C_1$-$C_{10}$-Alkylen $R^7$ ist perfluoriert oder teilweise fluoriert und bedeutet z.B. lineares Perfluoralkylen mit 2, 3, 4 oder 6 Kohlenstoffatomen, perfluoriertes 1,2-Propylen, 2,2-Propylen, 1,3-Butylen, 1,2-Butylen oder 2,2,2-Trifluor-1,1-ethylen oder 3,3,3-Trifluor-1,2-propylen.

Phenylen $R^8$ ist vorzugsweise unsubstituiertes Phenylen oder Phenylen, das durch ein oder zwei Reste der Art Fluor oder Trifluormethyl substituiert ist.

Der Index p steht insbesondere für die Zahl 1.

Perfluoriertes $C_1$-$C_{10}$-Alkyl $R^9$ ist beispielsweise perfluoriertes Niederalkyl, wie vorstehend für $R^6$ definiert, und insbesondere Perfluorbutyl, Perfluorpentyl, Perfluorhexyl oder Perfluorheptyl, insbesondere Perfluorhexyl.

$R^{10}$ in der Bedeutung $C_2$-$C_6$-Alkenyl mit Doppelbindung in Konjugation zum Phenylring der Formel IIIe steht z.B. für Vinyl ($-CH=CH_2$), 1-Methylvinyl oder 2-Methylvinyl, vorzugsweise für Vinyl. Die gleiche Definition gilt für $R^{15}$ in der Formel IVb.

$R^{12}$ hat insbesondere die vorstehend für $R^6$ angegebenen Bedeutungen.

Durch Niederalkyl substituiertes Cycloalkyl $R^{14}$ ist z.B. entsprechend substituiertes $C_5$-$C_7$-Cycloalkyl, wie Cyclopentyl, Cyclohexyl oder Cycloheptyl, welches jeweils durch ein bis fünf Niederalkylgruppen substituiert ist. Als Substituenten sind $C_1$-$C_4$-Alkylgruppen bevorzugt, insbesondere Methyl. Vorzugsweise ist Cycloalkyl $R^{14}$ zumindest einfach, bevorzugt mehrfach, in der 3-Position durch Niederalkyl substituiert. Herausragend geeignet ist zwei- bis vierfach durch Niederalkyl, z.B. Methyl, substituiertes Cyclohexyl, z.B.

3,5-Dimethylcyclohexyl, 3,3,5-Trimethylcyclohexyl oder 3,3,5,5-Tetramethylcyclohexyl.

Durch Niederalkyl substituiertes Cycloalkylniederalkyl $R^{14}$ bedeutet Reste wie vorstehend definiert, die über Niederalkyl, insbesondere Methyl, gebunden sind, also z.B. Trimethylcyclohexylmethyl, wie 3,3,5-Trimethylcyclohexylmethyl.

Unter unsubstituiertem oder durch Niederalkyl substituiertem Di- oder Oligocycloalkyl $R^{14}$ werden unsubstituierte oder durch Niederalkyl substituierte di-, tri- oder tetracyclische Kohlenwasserstoffreste verstanden. Diese Reste haben pro Ring vorzugsweise fünf oder sechs Ringglieder. Die Summe der Ringglieder beläuft sich vorzugsweise auf sieben bis 12 Kohlenstoffatome. Bevorzugte Reste $R^{14}$ sind beispielsweise Bicyclo[2.2.1]heptyl, Bicyclo[2.2.2]octyl, Tricyclo[5.2.1.$0^{2,6}$]decyl, Adamantyl, Bornyl oder Isobornyl.

Unsubstituiertes oder durch Niederalkyl substituiertes Di- oder Oligocycloalkylniederalkyl $R^{14}$ bedeutet Reste wie im vorstehenden Absatz definiert, die über Niederalkyl, insbesondere über Methyl, gebunden sind, also z.B. Tricyclo[5.2.1.$0^{2,6}$]decylmethyl oder Adamantylmethyl.

Mindestens eine tert.-Butylgruppe enthaltendes $C_5$-$C_{10}$-Alkyl, unsubstituiert oder durch Cycloalkyl substituiert, bedeutet insbesondere tert.-Butyl-$C_1$-$C_6$-alkyl, wie tert.-Butylmethyl, 2-tert.-Butylethyl oder 2-tert.-Butyl-2-cyclohexylethyl.

Bevorzugte Siloxanmonovinylkomponenten a) in den erfindungsgemässen Zusammensetzungen sind Verbindungen der Formel I, worin Ac der Acylrest einer vinylisch ungesättigten Carbonsäure mit drei oder 4 Kohlenstoffatomen ist, $R^1$ Niederalkylen bedeutet, n für 0 steht, $Z^2$ die Bedeutung von $Z^1$ hat und $Z^1$ unabhängig voneinander $OSi(R^4)_3$bedeutet, worin $R^4$ unabhängig voneinander Niederalkyl oder OSi-(Niederalkyl)$_3$ ist.

Ebenfalls bevorzugte Siloxanmonovinylkomponenten a) sind Verbindungen der Formel I, in denen n für 1 steht, die anderen im vorstehenden Absatz erwähnten Variablen die dort angegebenen Bedeutungen haben, $X^1$ für O und $X^2$ für NH steht, $R^2$ unsubstituiertes oder durch Niederalkyl substituiertes Phenylen, oder durch Niederalkyl substituiertes Cycloalkylenniederalkylen bedeutet und $R^3$ für Niederalkylen steht.

Besonders bevorzugt sind Verbindungen der Formel I, worin Ac für Acryloyl oder Methacryloyl steht, $R^1$ $C_2$-$C_4$-Alkylen bedeutet, n für 0 steht, $Z^2$ die Bedeutung von $Z^1$ hat und $Z^1$ $OSi(R^4)_3$ bedeutet, worin $R^4$ $C_1$-$C_4$-Alkyl oder $OSi(C_1\text{-}C_4\text{-Alkyl})_3$ ist. Speziell hervorzuhebende Einzelverbindungen sind beispielsweise Tris-(trimethylsiloxy)silylpropylmethacrylat und Tris(tris(trimethylsiloxy)siloxy)silylpropylmethacrylat.

Besonders bevorzugt sind ebenfalls Verbindungen der Formel I, worin n für 1 steht, die anderen im vorstehenden Absatz erwähnten Variablen die dort angegebenen Bedeutungen haben, $X^1$ für O und $X^2$ für NH steht, $R^2$ Phenylen, durch $C_1$-$C_4$-Alkyl substituiertes Phenylen oder durch $C_1$-$C_4$-Alkyl substituiertes Cyclohexylen-$C_1$-$C_4$-Alkylen bedeutet und $R^3$ für $C_2$-$C_4$-Alkylen steht. Speziell hervorzuhebende Verbindungen dieser Art sind solche, in denen $R^2$ für den bivalenten Kohlenwasserstoffrest von Tolylendiisocyanat oder Isophorondiisocyanat steht.

Bevorzugte Siloxanoligovinylkomponenten b) in den erfindungsgemässen Zusammensetzungen sind Verbindungen der Formel II, worin $Q^2$ für $Q^1$ steht, worin n 0 bedeutet, worin ferner Ac der Acylrest einer vinylisch ungesättigten Carbonsäure mit 3 oder 4 Kohlenstoffatomen ist, $R^1$ für Niederalkylen steht, m für 0 steht und $Z^2$ unabhängig voneinander für Niederalkyl oder $OSi(R^4)_3$ steht, worin $R^4$ Niederalkyl ist.

Speziell bevorzugt sind Verbindungen der Formel II, worin $Q^2$ für $Q^1$ steht, worin n 0 bedeutet, worin ferner Ac Acryloyl oder Methacryloyl bedeutet, $R^1$ für $C_1$-$C_4$-Alkylen steht und $Z^2$ $C_1$-$C_4$-Alkyl oder $OSi(R^4)_3$ bedeutet, worin $R^4$ für $C_1$-$C_4$-Alkyl steht. Speziell hervorzuhebende Einzelverbindungen sind beispielsweise 3,5-Bis(3-methacroyloxypropyl)-3,5-bis(trimethylsiloxy)-1,1,1,7,7,7-hexamethyltetrasiloxan und 1,3-Dimethacryloxypropyl-tetramethyldisiloxan.

Für die fluorhaltigen Vinylkomponenten c) gilt die spezielle Bevorzugung, dass Ac vom Acylrest der Itaconsäure verschieden ist.

Bevorzugte fluorhaltige Vinylkomponenten c) in den erfindungsgemässen Zusammensetzungen sind Verbindungen der Formel IIIa, b, c, d oder e, worin Ac der Acylrest einer vinylisch ungesättigten Carbonsäure mit 3 oder 4 Kohlenstoffatomen ist, $R^5$ $C_1$-$C_3$-Alkylen und $R^6$ fluoriertes Niederalkyl mit mindestens 3 Fluoratomen bedeuten oder $R^5$-$R^6$ zusammen für Hexafluorisopropyl oder Nonafluor-tert.-butyl steht, $R^7$ fluoriertes Niederalkylen bedeutet, $R^8$ für Phenylen steht, p 1 bedeutet, $R^9$ für perfluoriertes $C_4$-$C_8$-Alkyl steht, $R^{10}$ $C_2$-$C_3$-Alkenyl bedeutet, $R^{11}$ und $R^{13}$ für Wasserstoff stehen und $R^{12}$ fluoriertes Niederalkyl mit mindestens 3 Fluoratomen bedeutet.

Besonders bevorzugt sind Verbindungen der Formel IIIa, worin Ac für Acryloyl oder Methacryloyl steht, $R^5$ $C_1$-$C_2$-Alkylen und $R^6$ fluoriertes $C_1$-$C_4$-Alkyl mit mindestens 3 Fluoratomen bedeuten oder $R^5$-$R^6$ zusammen für Hexafluorisopropyl steht. Speziell hervorzuhebende Einzelverbindungen sind beispielsweise 2,2,2-Trifluorethylmethacrylat, 2,2,3,3-Tetrafluorpropylmethacrylat, 2,2,3,3,4,4,5,5-Octafluorpentylmethacrylat und Hexafluorisopropylmethacrylat.

Besonders bevorzugt sind ferner Verbindungen der Formel IIIb, worin Ac für Acryloyl oder Methacryloyl steht, $R^5$ $C_1$-$C_2$-Alkylen und $R^7$ fluoriertes $C_1$-$C_4$-Alkylen bedeutet, Verbindungen der Formel IIIc, worin Ac für Acryloyl oder Methacryloyl steht, und $R^8$ Phenylen bedeutet, Verbindungen der Formel IIId, worin Ac für Acryloyl oder Methacryloyl steht, p für 1 steht und $R^9$ perfluoriertes $C_5$-$C_7$-Alkyl bedeutet und Verbindungen der Formel IIIe, worin $R^{10}$ Vinyl oder 1-Methylvinyl bedeutet, $R^{11}$ und $R^{13}$ für Wasserstoff stehen und $R^{12}$ fluoriertes $C_1$-$C_4$-Alkyl mit mindestens 3 Fluoratomen bedeutet. Speziell hervorzuhebende Einzelverbindungen sind beispielsweise Hexafluor-bisphenol-A-bis-methacrylat und Tridecafluornonandiol-dimethacrylat (Verbindung der Formel IIId, worin $R^9$ für Tridecafluorhexyl steht).

Bevorzugte hydrophobe Vinylkomponenten mit sperrigem Kohlenwasserstoffrest d) sind Verbindungen der Formel IVa, worin Ac der Acylrest einer vinylisch ungesättigten Carbonsäure mit 3 oder 4 Kohlenstoffatomen ist und $R^{14}$ durch Niederalkyl substituiertes Cycloalkyl, unsubstituiertes oder durch Niederalkyl substituiertes Di- oder Tricycloalkyl, unsubstituiertes oder durch Niederalkyl substituiertes Bicycloalkylniederalkyl oder Tricycloalkylniederalkyl oder durch tert.-Butyl substituiertes $C_1$-$C_4$-Alkyl ist.

Besonders bevorzugt sind Verbindungen der Formel IVa, worin Ac für Acryloyl oder Methacryloyl steht und $R^{14}$ durch $C_1$-$C_4$-Alkyl substituiertes Cyclohexyl, unsubstituiertes oder durch $C_1$-$C_4$-Alkyl substituiertes $C_7$-$C_{12}$-Bi- oder Tricycloalkyl, unsubstituiertes oder durch $C_1$-$C_4$-Alkyl substituiertes $C_7$-$C_{12}$-Bi- oder Tricycloalkyl-$C_1$-$C_4$-alkyl oder durch tert.-Butyl substituiertes $C_1$-$C_4$-Alkyl ist.

Insbesondere bevorzugt sind Verbindungen der Formel IVa, worin Ac für Acryloyl oder Methacryloyl steht und $R^{14}$ durch $C_1$-$C_4$-Alkyl, insbesondere Methyl, zwei- bis vierfach substituiertes Cyclohexyl, unsubstituiertes oder durch $C_1$-$C_4$-Alkyl zwei- bis vierfach substituiertes Bicyclo[x.y.z]heptyl oder -octyl ist, worin x, y und z jeweils für 0 oder eine natürliche Zahl stehen, wobei die Summe von x, y und z für die Heptyl-Verbindungen 5 und für die Octyl-Verbindungen 6 beträgt, Tricyclo[w.x.y.z]decyl oder Tricyclo-[w.x.y.z]decyl-$C_1$-$C_4$-alkyl, worin w, x, y und z jeweils für 0 oder eine natürliche Zahl stehen, wobei die Summe von w, x, y und z 8 beträgt, oder durch tert.-Butyl einfach substituiertes $C_1$-$C_4$-Alkyl ist.

Ganz besonders bevorzugt sind die Verbindungen der Formel IVa, worin Ac Acryloyl oder Methacryloyl ist und $R^{14}$ Trimethylcyclohexyl, Bicyclo[2.2.1]heptyl, Bicyclo[2.2.2]octyl, Bornyl, Isobornyl, Tricyclo-[5.2.1.$0^{2,6}$]decyl, Adamantyl, Tricyclo[5.2.1.$0^{2,6}$]decylmethyl, Adamantylmethyl, tert.-Butylmethyl (2,2-Dimethylpropyl) oder 2-tert.-Butylethyl (3,3-Dimethylpropyl) bedeutet. Speziell hervorzuhebende Einzelverbindungen sind 3,3,5-Trimethylcyclohexylmethacrylat, Isobornylmethacrylat, Neopentylmethacrylat und Tricyclo-[5.2.1.0]decylmethacrylat.

Ebenfalls bevorzugte hydrophobe Vinylkomponenten mit sperrigem Kohlenwasserstoffrest d) sind Verbindungen der Formel IVb, worin $R^{15}$ $C_2$-$C_3$-Alkenyl bedeutet und $R^{16}$ für Wasserstoff steht oder durch Niederalkyl substituiertes Cycloalkyl, unsubstituiertes oder durch Niederalkyl substituiertes Di- oder Tricycloalkyl, unsubstituiertes oder durch Niederalkyl substituiertes Bicycloalkylniederalkyl oder Tricycloalkylniederalkyl oder durch tert.-Butyl substituiertes $C_1$-$C_4$-Alkyl ist, wobei jedoch mindestens ein $R^{16}$ von Wasserstoff verschieden ist. Unter diesen Verbindungen der Formel IVb sind jene besonders bevorzugt, in denen ein $R^{16}$ Wasserstoff bedeutet und das andere $R^{16}$ von Wasserstoff verschieden ist.

Insbesondere bevorzugt sind Verbindungen der Formel IVb, worin $R^{15}$ Vinyl oder 1-Methylvinyl bedeutet, ein $R^{16}$ Wasserstoff und das andere $R^{16}$ durch $C_1$-$C_4$-Alkyl, insbesondere Methyl, zwei- bis vierfach substituiertes Cyclohexyl, unsubstituiertes oder durch $C_1$-$C_4$-Alkyl zwei- bis vierfach substituiertes Bicyclo[x.y.z]heptyl oder -octyl ist, worin x, y und z jeweils für 0 oder eine natürliche Zähl stehen, wobei die Summe von x, y und z für die Heptyl-Verbindungen 5 und für die Octyl-Verbindungen 6 beträgt, Tricyclo-[w.x.y.z]decyl oder Tricyclo[w.x.y.z]decyl-$C_1$-$C_4$-alkyl, worin w, x, y und z jeweils für 0 oder eine natürliche Zahl stehen, wobei die Summe von w, x, y und z 8 beträgt, oder durch tert.-Butyl einfach substituiertes $C_1$-$C_4$-Alkyl ist.

Wie bereits erwähnt enthalten die erfindungsgemässen Polymere eventuell zusätzlich eine hydrophile Vinylkomponente und/oder eine zusätzliche vernetzende Komponente.

Bei den geeigneten hydrophilen Vinylkomponenten e) handelt es sich um Verbindungen der Formel

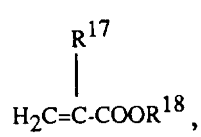

worin $R^{17}$ für Wasserstoff oder Methyl steht und $R^{18}$ einen durch eine wasserlöslich machende Gruppe wie Carboxy, Hydroxy oder tert.-Amino, z.B. tert. Niederalkylamino mit 1 bis 7 Kohlenstoffatomen je Niederalkylgruppe, eine Polyethylenoxidgruppe mit 2-100 sich wiederholenden Einheiten, bevorzugt mit 2-40 sich

wiederholenden Einheiten, oder eine Sulfat-, Phosphat-, Sulfonat- oder Phosphonatgruppe einfach oder mehrfach substituierten Kohlenwasserstoffrest mit 1 bis 10 Kohlenstoffatomen bedeutet, wie z.B. einen entsprechend substituierten Alkyl-, Cycloalkyl- oder Phenylrest oder eine Kombination solcher Reste, wie Phenylalkyl oder Alkylcycloalkyl, ferner Acrylamide und Methacrylamide der Formel

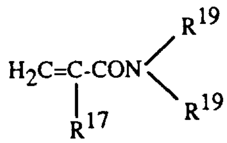,

worin $R^{19}$ für Wasserstoff oder $C_1$-$C_4$-Alkyl steht;
Acrylamide und Methacrylamide der Formel

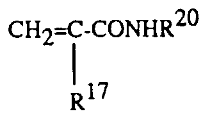,

worin $R^{20}$ die Bedeutung von $R^{18}$ oder $R^{19}$ hat;
Maleinate und Fumarate der Formel

$R^{18}OOC\text{-}CH=CH\text{-}COOR^{18}$;

Crotonate der Formel

$CH_3\text{-}CH=CH\text{-}COOR^{18}$;

Vinylether der Formel

$H_2C=CH\text{-}OR^{18}$;

Vinyl-substituierte fünf- oder sechsgliedrige Heterocyclen mit ein oder zwei Stickstoffatomen sowie N-Vinyllactame, wie N-Vinyl-2-pyrrolidon, und vinylisch ungesättigte Carbonsäuren mit insgesamt 3 bis 10 Kohlenstoffatomen, wie Methacrylsäure, Crotonsäure, Fumarsäure oder Zimtsäure.

Bevorzugt sind z.B. durch Hydroxy substituierte $C_2$-$C_4$-Alkyl(meth)acrylate, fünf- bis siebengliedrige N-Vinyllactame, N,N-Di-$C_1$-$C_4$-alkyl(meth)acrylamide und vinylisch ungesättigte Carbonsäuren mit insgesamt 3 bis 5 Kohlenstoffatomen.

Zu den verwendbaren hydrophilen Monomeren e) gehören: 2-Hydroxyethyl-, 2- und 3-Hydroxypropyl-, 2,3-Dihydroxypropyl-, Polyethoxyethyl- und Polyethoxypropylacrylate und -methacrylate sowie die entsprechenden Acrylamide und Methacrylamide, Acrylamid und Methacrylamid, N-Methylacrylamid und -methacrylamid, Bisaceton-acrylamid, 2-Hydroxyethylacrylamid, Dimethylacrylamid und -methacrylamid sowie Methylolacrylamid und -methacrylamid, N,N-Dimethyl- und N,N-Diethylaminoethylacrylat und -methacrylat sowie die entsprechenden Acrylamide und Methacrylamide, N-tert.-Butylaminoethylmethacrylat und -methacrylamid, 2- und 4-Vinylpyridin, 4- und 2-Methyl-5-vinylpyridin, N-Methyl-4-vinylpiperidin, 1-Vinyl- und 2-Methyl-1-vinyl-imidazol, Dimethylallylamin und Methyldiallylamin sowie para-, meta- und ortho-Aminostyrol, Dimethylaminoethylvinylether, N-Vinylpyrrolidon und 2-Pyrrolidinoethylmethacrylat, Acryl- und Methacrylsäure, Itaconsäure, Zimtsäure, Crotonsäure, Fumarsäure, Maleinsäure und deren Hydroxyniederalkylmono- und -diester, wie 2-Hydroxyethyl- und Di-(2-hydroxy)-ethylfumarat, -maleinat und -itaconat, sowie 3-Hydroxypropyl-butylfumarat und Di-polyalkoxyalkyl-fumarate, -maleinate und -itaconate, Maleinsäureanhydrid, Natriumacrylat und -methacrylat, 2-Methacryloyloxyethylsulfonsäure, 2-Acrylamido-2-methylpropansulfonsäure, 2-Phosphatoethylmethacrylat, Vinylsulfonsäure, Natriumvinylsulfonat, p-Styrolsulfonsäure, Natrium-p-styrolsulfonat und Allylsulfonsäure, N-Vinylpyrrolidon, N-Vinylpyridon, N-Vinylcaprolactam, ferner die quaternisierten Derivate kationischer Monomerer, welche man durch Quaternierung mit ausgewählten Alkylierungsmitteln, z.B. halogenierten Kohlenwasserstoffen wie Methyliodid, Benzylchlorid oder Hexadecylchlorid, Epoxiden wie Glycidol, Epichlorhydrin oder Ethylenoxid, Acrylsäure, Dimethylsulfat, Methylsulfat und Propansulton erhält.

Bevorzugte Monomere e) sind 2-Hydroxyethylmethacrylat, N-Vinyl-2-pyrrolidon, N,N-Dimethylacrylamid sowie Acryl- und Methacrylsäure.

Bei den zusätzlichen vernetzenden Komponenten f) handelt es sich z.B. um di-, tri- oder tetraolefinische, insbesondere um diolefinische Monomere, z.B. Allylacrylat und -methacrylat, Ethylenglykol-, Diethylenglykol-, Triethylenglykol-, Tetraethylenglykol- und allgemein Polyethylenoxidglykoldiacrylate und -dimethacrylate 1,4-Butandiol- und Poly-n-butylenoxidglykoldiacrylate und -dimethacrylate, Propylenglykol- und Polypropylenoxidglykoldiacrylate und -dimethacrylate, Thiodiethylenglykoldiacrylat und -dimethacrylat, Di-(2-hydroxyethyl)-sulfondiacrylat und -dimethacrylat, Neopentylglykoldiacrylat und -dimethacrylat, Trimethylolpropan-tri- und -tetraacrylat, Pentaerythrit-tri- und -tetraacrylat, Divinylbenzol, Divinylether, Divinylsulfon, Disiloxanyl-bis-3-hydroxypropyldiacrylat oder-methacrylat und verwandte Verbindungen. Ethylenglykoldimethacrylat ist bevorzugt.

Ferner können als zusätzliche vernetzende Komponente f) Macromere der Formel Va verwendet werden,

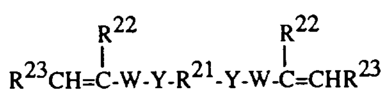

(Va),

worin $R^{21}$ eine Polysiloxankette mit einem Molekulargewicht von ca. 400 bis ca. 8000 darstellt, und die Formel

$$-R^{26}\left[SiO(CH_3)_2\right]_k Si(CH_3)_2-R^{26}-$$

besitzt,
$R^{22}$ Wasserstoff oder Methyl bedeutet,
$R^{23}$ Wasserstoff oder $-COOR^{24}$ bedeutet,
$R^{24}$ Wasserstoff oder Alkyl mit 1 bis 10 Kohlenstoffatomen bedeutet, unter der Voraussetzung, dass zumindest einer der Reste $R^{22}$ und $R^{23}$ Wasserstoff ist,
W -O-, -COO- oder $-CONR^{25}-$ bedeutet,
$R^{25}$ Wasserstoff oder Alkyl mit 1 bis 5 Kohlenstoffatomen bedeutet,
$R^{26}$ verzweigtes oder lineares Alkylen mit 1 bis 7 Kohlenstoffatomen oder $(CH_2CH_2O)_qCH_2CH_2$ bedeutet, worin q für eine Zahl von 1 bis 20 steht,
k eine ganze Zahl von 3 bis 120 bedeutet,
Y eine direkte Bindung oder den zweiwertigen Rest $-R^{27}-X^3-CONH-R^{28}-NHCO-X^4-$darstellt,
$R^{27}$ ein an W gebundenes lineares oder verzweigtes unsubstituiertes oder durch Diniederalkylamino oder Hydroxy substituiertes Alkylen mit 2 bis 5 Kohlenstoffatomen bedeutet,
$R^{28}$ einen zweiwertigen Rest darstellt, der durch Entfernen der NCO-Gruppen aus einem aliphatischen, cycloaliphatischen oder aromatischen Diisocyanat erhalten wird,
$X^3$ -O- oder $-NR^{25}-$ bedeutet,
$X^4$ die Bedeutung von $X^3$ besitzt oder -S- bedeutet und an $R^{26}$ gebunden ist, unter der Voraussetzung, dass, wenn W -O- bedeutet, Y von einer direkten Bindung verschieden ist, und $R^{22}$ und $R^{23}$ Wasserstoff bedeuten,
oder Macromere der Formel Vb,

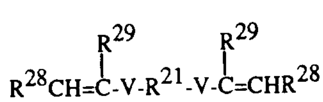

(Vb)

worin $R^{28}$ und $R^{29}$ unabhängig voneinander Wasserstoff oder Methyl bedeuten, V den zweiwertigen Rest $-R^{30}-R^{31}-NHCO-X^4-$ darstellt, der über $X^4$ an $R^{21}$ gebunden ist und worin $R^{30}$ für Phenylen oder durch

Niederalkyl substituiertes Phenylen steht, $R^{31}$ eine Bindung oder Niederalkylen bedeutet, und worin $R^{21}$ und $X^4$ die vorstehend angegebenen Bedeutungen aufweisen.

Erfindungsgemäss mit umfasst ist auch die Verwendung von Macromeren, die Mischtypen von Verbindungen der Formeln Va und Vb sind. Damit sind Verbindungen gemeint, in denen eine Polysiloxankette $R^{21}$ auf einer Seite einen Rest $R^{23}CH=C(R^{22})$-W-Y- trägt und auf der anderen Seite einen Rest $R^{28}CH=C(R^{29})$-V- trägt.

Die endständigen Reste der Verbindungen der Formel Va sind gemäss den Definitionen von $R^{22}$ und $R^{23}$, wenn W -COO- oder $CONR^{25}$- bedeutet, die Acylreste der Acryl- oder Methacrylsäure oder die Monoacylreste der Malein- oder Fumarsäure oder von Monoalkylestern dieser Säuren mit geradkettigen oder verzweigten Alkanolen mit 1 bis 10 Kohlenstoffatomen, wie Methanol, Ethanol, Butanol, Isobutylalkohol oder Decanol, oder wenn W Sauerstoff (Oxa) bedeutet, der Vinyloxyrest von Vinylethern.

Verbindungen der Formel Va, bei denen Y eine direkte Bindung darstellt, sind Diester von makromolekularen Diolen, worin Hydroxygruppen an die Polykondensatkette $R^{21}$ gebunden sind, mit $\alpha,\beta$-ungesättigten Säuren. Derartige Ester können aus dem makromolekularen Diol nach allgemein bekannten Acylierungsmethoden unter Verwendung von reaktionsfähigen funktionellen Derivaten von geeigneten Säuren, z.B. Chloriden der Acryl- oder Methacrylsäure, oder Monoalkylestern der Malein- oder Fumarsäure; oder vom Anhydrid der Maleinsäure, hergestellt werden.

Gemäss der Definition der Formel Va kann Y weiterhin ein zweiwertiger Rest -$R^{27}$-$X^3$-CONH-$R^{28}$-NHCO-$X^4$- sein. Hierin ist $R^{27}$ z.B. Methylen, Propylen, Trimethylen, Tetramethylen, Pentamethylen, Neopentylen (2,2-Dimethyltrimethylen), 2-Hydroxytrimethylen oder 1-(Dimethylaminomethyl)-ethylen und insbesondere Ethylen. Der zweiwertige Rest $R^{28}$ leitet sich von einem organischen Diisocyanat ab und ist ein aliphatischer Rest, wie Alkylen, z.B. Ethylen, Tetramethylen, Hexamethylen, 2,2,4-Trimethylhexamethylen, 2,4,4-Trimethylhexamethylen; Fumaroyldiethylen oder 1-Carboxypentamethylen; ein cycloaliphatischer Rest, z.B. 1,4-Cyclohexylen oder 2-Methyl-1,4-cyclohexylen; und ein aromatischer Rest, wie m-Phenylen, p-Phenylen, 2-Methyl-m-phenylen;1,2-, 1,3-, 1,5-, 1,6-, 1,7-, 1,8-, 2,3- und 2,7-Naphthylen, 4-Chlor-1,2- und 4-Chlor-1,8-naphthylen, 1-Methyl-2,4-, 1-Methyl-2,7-, 4-Methyl-1,2-, 6-Methyl-1,3- und 7-Methyl-1,3-naphthylen, 1,8-Dinitro-2,7-naphthylen, 4,4'-Biphenylen, 3,3'-Dichlor-4,4'-biphenylen, 3,3'-Dimethoxy-4,4'-biphenylen, 2,2'-Dichlor-5,5'-dimethoxy-4,4'-biphenylen, Methylendi-p-phenylen. Methylenbis-(3-chlorphenylen), Ethylendi-p-phenylen oder Oxydi-p-phenylen. Liegt Y in der Formel Va nicht in Form einer direkten Bindung vor, so ist $R^{27}$ stets an W gebunden.

$R^{21}$ leitet sich insbesondere von makromeren Diolen, Diaminen oder Dithiolen mit einem Molekulargewicht (MW) von 200 bis 8000 ab. Weitere Einzelheiten, insbesondere die Herstellung der Verbindungen der Formel Va sind in der US-PS 4,136,250 beschrieben.

Die bevorzugten Siloxanmakromeren der Formel Va besitzen ein Molekulargewicht im Bereich von ca. 600 bis ca. 8500 und umfassen ein Polysiloxandiol mit einem Molekulargewicht von ca. 400 bis ca. 8000, das zuerst mit Isophorondiisocyanat oder Tolylen-2,4-diisocyanat endständig abgeschlossen wurde, und dann mit einer Hydroxyverbindung, ausgewählt unter den Hydroxyalkylestern, worin Alkyl 2 bis 4 Kohlenstoffatome aufweist, der Acrylsäure, Methacrylsäure, Maleinsäure und Fumarsäure, und den Hydroxyalkylvinylethern, worin Alkyl 2 bis 4 Kohlenstoffatome aufweist, umgesetzt wurde.

Vorzugsweise ist die Hydroxyverbindung 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 2,3-Dihydroxypropylacrylat oder 2,3-Dihydroxypropylmethacrylat. Die bevorzugteste Hydroxyverbindung ist 2-Hydroxyethylmethacrylat. Bevorzugte Diisocyanate sind Tolylen-2,4-diisocyanat und Isophorondiisocyanat.

Für Verbindungen der Formel Vb gelten die für Verbindungen der Formel Va genannten Definitionen und Bevorzugungen ebenfalls, soweit diese sich anwenden lassen, d.h. beispielsweise für $R^{21}$. Vorzugsweise bedeuten in den Verbindungen der Formel Vb $R^{28}$ Wasserstoff, $R^{29}$ Methyl, $R^{30}$ Phenylen oder durch $C_1$-$C_4$-Alkyl substituiertes Phenylen, $R^{31}$ $C_1$-$C_4$-Alkylen und $X^4$ Sauerstoff.

Die bevorzugten Siloxanmakromeren der Formel Vb besitzen ein Molekulargewicht im Bereich von ca. 600 bis ca. 8500 und umfassen ein Polysiloxandiol mit einem Molekulargewicht von ca. 400 bis ca. 8000, das mit einem Monoisocyanat der Formel $R^{28}CH=C(R^{29})$-$R^{30}$-$R^{31}$-NCO terminiert wurde, worin $R^{28}$ Wasserstoff bedeutet, $R^{29}$ für Methyl steht, $R^{30}$ für Phenylen oder $C_1$-$C_4$-Alkyl-phenylen steht und $R^{31}$ $C_1$-$C_4$-Alkylen bedeutet, insbesondere z.B. 2,2-Propylen.

Die erfindungsgemässen, zu polymerisierenden Mischungen sind vorzugweise frei von Silanol-funktionalisierten (Meth)acrylaten.

Die Anteile der Komponenten in der zu polymerisierenden Mischung respektive im Polymer betragen (Angaben in Gewichtsprozent)

a) 20-60 % Siloxanmonovinylkomponente

b) 1-25 % Siloxanoligovinylkomponente

c) 10-55 % fluorhaltige Vinylkomponente
d) 3-30 % hydrophobe Vinylkomponente mit sperrigem Kohlenwasserstoffrest
e) 0-10 % hydrophile Vinylkomponente
f) 0-15 % zusätzliche vernetzende Vinylkomponente.

Bevorzugte Anteile der Komponenten a)-f) sind:

a) 30-45 %
b) 2-15 %
c) 15-50 %
d) 3-30 %
e) falls anwesend, 5-10 %
f) falls anwesend, 5-10 %.

Besonders bevorzugte Anteile der Komponenten a)-f) sind:

a) 40-45 %
b) 5-10 %
c) 29-40 %
d) 3-15 %
e) falls anwesend, 5-10 %
f) falls anwesend, 5-10 %.

Anteile der Komponenten e und/oder f) von jeweils 8-10 % sind besonders bevorzugt.

Am meisten bevorzugt sind die folgenden Anteile der Komponenten a)-f):

a) 35-40 %
b) 5-10 %
c) 29-35 %
d) 3-10 %
e) 8-10 %
f) 8-10 %.

In den Fällen, in denen die Komponente f) mit 5 oder mehr Prozent vertreten ist, handelt es sich bei ihr vorzugsweise um eine Verbindung der Formel V.

Die erfindungsgemäss zu verwendenden Vinylkomponenten sind bekannt, z.T. käuflich, oder auf an sich bekannte Weise herstellbar. Die Herstellung der Macromere der Formel V ist z.B. in der US 4,136,250 beschrieben.

Die erfindungsgemässen Polymere werden z.B. durch Photopolymerisation, thermische Polymerisation oder durch Radikalcopolymerisation, entweder in der Masse oder in Gegenwart geringer Mengen Lösungsmittel, erzeugt. Die Polymerisation wird zweckmässig in der Wärme durchgeführt, vorzugsweise in Gegenwart eines freie Radikale bildenden Initiators, beispielsweise bei einer Temperatur im Bereich von etwa 30 °C bis etwa 105 °C. Diese Initiatoren sind vorzugsweise Peroxide oder Azokatalysatoren mit einer Halbwertszeit von mindestens 20 Minuten bei der Polymerisationstemperatur. Typische Beispiele für verwendbare Peroxyverbindungen sind Isopropylpercarbonat, tert.-Butylperoctoat, Benzoylperoxid, Lauroylperoxid, Decanoylperoxid, Acetylperoxid, Bernsteinsäureperoxid, Methylethylketonperoxid, tert.-Butylperoxyacetat, Propionylperoxid, 2,4-Dichlorbenzoylperoxid, tert.-Butylperoxypivalat, Pelargonylperoxid, 2,5-Dimethyl-2,5-bis-(2-ethylhexanoylperoxy)-hexan, p-Chlorbenzoylperoxid, tert.-Butylperoxybutyrat, tert.-Butylperoxymaleinsäure, tert.-Butylperoxyisopropylcarbonat und Bis-(1-hydroxycyclohexyl)-peroxid.

Zu Azoverbindungen gehören 2,2'-Azo-bis-isobutyronitril, 2,2'-Azo-bis-(2,4-dimethylvaleronitril), 1,1'-Azo-bis-(cyclohexancarbonitril) und 2,2'-Azo-bis-(2,4-dimethyl-4-methoxyvaleronitril).

Geeignete Initiatoren sind ferner Photoinitiatoren, Benzoinether, Darocure-Typen (Merck) oder Irgacure-Typen (CIBA-GEIGY).

Man kann dabei auch andere, freie Radikale bildende Mechanismen anwenden wie Strahlung mit z.B. Röntgenstrahlen, Elektronenstrahlen und UV-Strahlung.

Die Initiatormenge kann zwischen 0,01 und 1,5 Gew.%, bezogen auf die Bestandteile a) bis f), schwanken, liegt aber vorzugsweise bei 0,01 bis 0,5 Gew.%.

Die zu polymerisierenden Monomere werden zweckmässigerweise vor der Polymerisation gereinigt, insbesondere um Inhibitoren zu entfernen, mit denen sie stabilisiert sind. So werden sie beispielsweise mit geeigneten verdünnten wässrigen Basen, wie Alkalimetallhydroxiden, z.B. Natronlauge, gewaschen und unter schonendenTemperaturbedingungen destillativ gereinigt.

Die Polymerisationsgemische können auf an sich bekannte Weise, beispielsweise in Zylinderform, polymerisiert werden, beispielsweise indem man sie in geschlossenen zylindrischen Formen (Rohren) einem Temperaturprogramm unterwirft, bei dem die Temperatur von 30 °C stufenweise bis etwa 100 °C erhöht wird. Die Temperaturstufen können z.B. zwischen 5 und 10 °C betragen, mit einer Verweildauer von

1 bis 12 Stunden pro Temperatur. Üblich sind zwei- oder fünfstündige Intervalle, es können einzelne Temperaturen jedoch auch bis zu 20 Stunden gehalten werden. Üblicherweise wird am Ende 1 bis 15 Stunden bei Temperaturen zwischen 80 und 130 °C getempert.

Auch die Herstellung von erfindungsgemässen Kontaktlinsen kann auf an sich bekannte Weise erfolgen. Dazu werden z.B. die Vinylkomponenten in zylindrischer Form polymerisiert, und die erhältlichen Stäbe nach Entformung in Scheiben oder Knöpfe zerteilt, die weiter mechanisch bearbeitet werden können, insbesondere durch Drehverfahren. Alternativ kann die Polymerisation auch in Linsenformen durchgeführt werden, so dass direkt Linsenrohlinge als Polymerisate erhalten werden. Ferner können Kontaktlinsen durch Polymerisation der Vinylkomponenten in geeigneten Formen direkt ("full mold"-Verfahren) oder mit nur einer fertigen Fläche ("semi mold"-Verfahren) hergestellt werden.

Die Reaktion erfolgt vorzugsweise unter einer inerten Atmosphäre, wenn sie in offenen Formen durchgeführt wird. Bekanntlich hemmt Sauerstoff die Polymerisation und führt zu verlängerten Polymerisationszeiten. Werden geschlossene Formen zur Bildung des Polymerisats verwendet, so bestehen die Formen aus inerten Materialien mit niedriger Sauerstoffdurchlässigkeit und mit nicht-klebenden Eigenschaften. Beispiele für geeignete Formmaterialien sind Polytetrafluorethylen, wie Teflon®, Silikonkautschuk, Polyethylen, Polypropylen und Polyester wie Mylar®. Bei Einsatz eines geeigneten Entformungsmittels sind auch Formen aus Glas und Metall verwendbar.

Die nachfolgenden Beispiele erläutern den Gegenstand der Erfindung, ohne ihn jedoch, etwa auf den Umfang der Beispiele, zu beschränken. Prozente bei Mengenangaben sind Gewichtsprozente soweit nicht ausdrücklich anders angegeben. Temperaturen werden in Grad Celsius angegeben.

Die verwendeten Abkürzungen haben folgende Bedeutungen:

- A1: Tris(trimethylsiloxy)silylpropylmethacrylat
- A2: Tris(tris(trimethylsiloxy)siloxy)silylpropylmethacrylat
- B1: 3,5-Bis(3-methacroyloxy-propyl)-3,5-bis(trimethylsiloxy)-1,1,1,7,7,7-hexamethyltetrasiloxan
- B2: 1,3-Dimethacryloxypropyl-tetramethyldisiloxan
- C1: 2,2,2-Trifluorethylmethacrylat
- C2: 2,2,3,3-Tetrafluorpropylmethacrylat
- C3: 2,2,3,3,4,4,5,5-Octafluorpentylmethacrylat
- C4: Hexafluorisopropylmethacrylat
- C5: Hexafluor-bisphenol-A-bismethacrylat
- C6: Tridecafluornonandiol-dimethacrylat (Verbindung der Formel IIId, worin $R^9$ für Tridecafluorhexyl steht)
- D1: 3,3,5-Trimethylcyclohexylmethacrylat
- D2: Isobornylmethacrylat
- D3: Neopentylmethacrylat
- D4: Tricyclo[5.2.1.0]decylmethacrylat
- E1: Methacrylsäure
- F1: Umsetzungsprodukt von Poly(dimethylsiloxan)di(alkylenol) mit 2 Äquivalenten Isophorondiisocyanat und danach mit 2 Äquivalenten Hydroxyethylmethacrylat
- F2: Ethylenglykoldimethacrylat

Beispiele:

Allgemeine Vorschrift für die Herstellung der Polymere:

Die Monomeren werden im angegebenen Verhältnis (siehe Tabellen) gemischt. Eventuell vorhandene Polymerisationsinhibitoren werden zuvor durch Waschen mit wässriger Base entfernt. Nach Zugabe von 0,1 % Photoinitiator (Benzoinether, DAROCUR oder IRGACUR) wird die Mischung gerührt und anschliessend mit üblichen Techniken von Sauerstoff befreit. Die Monomermischung wird in Kunststoff-Formen mit UV-Licht, dessen Wellenlänge auf den Photoinitiator abgestimmt ist, 0,5-6 Stunden bestrahlt. Anschliessend werden die Rohlinge 1-5 Stunden bei 80-130 °C/1-500 Pa getempert.

Die Sauerstoffpermeabilität wird nach FATT an 0,2 mm dicken Scheiben, die Kugeldruckhärte nach DIN 53 456 bei 358 N Belastung bestimmt.

Vergleichsbeispiele 1-3: Sauerstoff-Permeabilität (Dk) und Kugeldruckhärte (KDH) der getemperten Copolymerisate aus einer 1:1-Monomermischung (Stoffmengengehalt in %)

| Nr. | Monomere | Dk $\frac{10^{11} ml O_2 \times cm}{cm^2 \times s \times mm Hg}$ | KDH ($N/mm^2$) |
|---|---|---|---|
| 1 | D1 MMA* | 11 | 177 |
| 2 | D1 C2 | 12 | 155 |
| 3 | D1 C3 | 13 | 107 |

* MMA = Methylmethacrylat

Vergleichsbeispiele 4-7:

| Nr. | Monomergehalt (%) | | | |
|---|---|---|---|---|
| | A1 | B1 | C1 | MMA* |
| 4 | 30 | 10 | 30 | 30 |
| 5 | 40 | 10 | 30 | 20 |
| 6 | 40 | 10 | 40 | 10 |
| 7 | 44,7 | 11,1 | 33,5 | 10,7 |

* MMA = Methylmethacrylat

Materialeigenschaften der Vergleichsbeispiele 4-7:

| | 4 | 5 | 6 | 7 |
|---|---|---|---|---|
| Dk* | 34 | 58 | 76 | 86 |
| KDH* | 74 | 62 | 57 | 52 |

* Einheiten wie bei Vergleichsbeispielen 1-3

Tabelle 1

| (Beispiele 1-5) | | | | | | |
|---|---|---|---|---|---|---|
| Beispiel | Monomerengehalt (%) | | | | | |
| | A1 | B1 | C1 | D1 | E1 | F2 |
| 1 | 30 | 10 | 30 | 30 | - | - |
| 2 | 40 | 10 | 30 | 20 | - | - |
| 3 | 40 | 10 | 40 | 10 | - | - |
| 4 | 45 | 10 | 30 | 15 | - | - |
| 5 | 40 | 12,5 | 25 | 12,5 | 5 | 5 |

Materialeigenschaften der Beispiele 1-5:

| | 1 | 2 | 3 | 4 | 5 |
|---|---|---|---|---|---|
| Dk* | 57 | 78 | 91 | 110 | 85 |
| KDH* | 78 | 63 | 55 | 54 | 65 |

* Einheiten wie bei Vergleichsbeispielen 1-3

Tabelle 2 (Beispiele 6-19)

Angegeben sind jeweils Art und Menge (in Prozent) der Vinylkomponente

| Nr. | Typ a) | Typ b) | Typ c) | Typ d) | Typ e) | Typ f) | Dk * | KDH* |
|---|---|---|---|---|---|---|---|---|
| 6 | A1 (43) | B1 (2) | C1 (10)+C6 (30) | D1 (15) | - | - | 114 | 56 |
| 7 | A1 (35) | B1 (10) | C1 (10)+C6 (30) | D1 (15) | - | - | 110 | 61 |
| 8 | A2 (45) | B1 (10) | C1 (15) | D1 (30) | - | - | 70 | 65 |
| 9 | A1 (45) | B2 (10) | C1 (30) | D1 (15) | - | - | 110 | 60 |
| 10 | A1 (43) | B2 (2) | C1 (30)+C5 (5) | D1 (10) | E1 (10) | - | 70 | 80 |
| 11 | A1 (45) | B1 (10) | C1 (30) | D2 (15) | - | - | 91 | 61 |
| 12 | A1 (45) | B1 (10) | C1 (30) | D3 (15) | - | - | 117 | 56 |
| 13 | A1 (45) | B1 (10) | C4 (30) | D1 (15) | - | - | 138 | 52 |
| 14 | A1 (45) | B1 (10) | C4 (40) | D1 (5) | - | - | 151 | 48 |
| 15 | A1 (40) | B1 (9) | C1 (29) | D1 (3) | E1 (9) | F1 (10) | 118 | 54 |
| 16 | A1 (35) | B1 (5) | C1 (35) | D1 (5) | E1 (10) | F1 (10) | 92 | 61 |
| 17 | A1 (30) | B1 (14) | C4 (39) | D1 (3) | E1 (9) | F1 (5) | 120 | 63 |
| 18 | A1 (43) | B1 (2) | C4 (40)+C6 (10) | D1 (5) | - | - | 142 | 52 |

* Einheiten wie bei Vergleichsbeispielen 1-3

**Patentansprüche**

**Patentansprüche für folgende Vertragsstaaten : AT, BE, CH, LI, DE, DK, FR, GB, GR, IT, LU, NL, SE**

**1.** Polymere, bei denen es sich um die Copolymerisationsprodukte von Monomermischungen handelt, die folgende Monomere enthalten:

a) 20-60 Gew.% Siloxanmonovinylkomponente
b) 1-25 Gew.% Siloxanoligovinylkomponente
c) 10-55 Gew.% fluorhaltige Vinylkomponente
d) 3-30 Gew.% hydrophobe Vinylkomponente mit sperrigem Kohlenwasserstoffrest
e) 0-10 Gew.% hydrophile Vinylkomponente
f) 0-15 Gew.% zusätzliche vernetzende Vinylkomponente,

wobei es sich bei der hydrophoben Vinylkomponente mit sperrigem Kohlenwasserstoffrest um eine Verbindung der Formel IVa handelt

$Ac\text{-}O\text{-}R^{14}$

worin Ac der Acylrest einer vinylisch ungesättigten Carbonsäure mit 3-5 Kohlenstoffatomen Ist und $R^{14}$ durch Niederalkyl substituiertes Cycloalkyl, durch Niederalkyl substituiertes Cycloalkylniederalkyl, unsubstituiertes oder durch Niederalkyl substituiertes Di- oder Oligocycloalkyl, unsubstituiertes oder durch Niederalkyl substituiertes Di- oder Oligocycloalkyl-niederalkyl oder mindestens eine tert.-Butylgruppe enthaltendes $C_5$-$C_{10}$-Alkyl bedeutet, welches unsubstituiert oder durch Cycloalkyl substituiert ist,

oder um eine Verbindung der Formel IVb

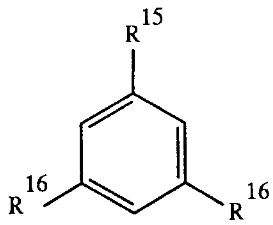

worin $R^{15}$ $C_2$-$C_6$-Alkenyl mit der Doppelbindung in Konjugation zum Phenylring bedeutet und $R^{16}$ für Wasserstoff steht oder die Bedeutung von $R^{14}$ hat, wobei jedoch mindestens ein $R^{16}$ von Wasserstoff verschieden ist.

**2.** Polymer gemäss Anspruch 1, dadurch gekennzeichnet, dass die Monomermischung die folgenden Monomere enthält:

a) eine Siloxanmonovinylkomponente der Formel I

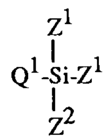

worin $Q^1$ für den Rest der Teilformel

$Ac\text{-}O\text{-}R^1\{A\text{-}R^2\text{-}A'\text{-}R^3\}_n$

steht, Ac der Acylrest einer vinylisch ungesättigten Carbonsäure mit 3-5 Kohlenstoffatomen ist, $R^1$ und $R^2$ unabhängig voneinander Niederalkylen, Cycloalkylen, Arylen oder eine Kombination von Niederalkylen mit Cycloalkylen oder Niederalkylen mit Arylen bedeuten, $R^3$ für Niederalkylen oder Cycloalkylen steht, A und A' unabhängig voneinander $X^1$-CO-$X^2$ bedeuten, wobei jeweils $X^2$ an $R^2$ gebunden ist, und $X^2$ für -NH- oder eine Bindung und $X^1$ für -O-, oder -NR-, worin R Niederalkyl bedeutet, stehen, worin die Reste $Z^1$ unabhängig voneinander $OSi(R^4)_3$ bedeuten, worin $R^4$ unabhängig voneinander für Niederalkyl, Phenyl oder $OSi(\text{Niederalkyl})_3$ steht, $Z^2$ Niederalkyl, Phenyl oder $Z^1$ bedeutet und n den Wert 0 oder 1 hat,

b) eine Siloxanoligovinylkomponente der Formel II

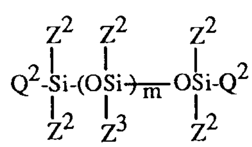

worin $Q^2$ die Bedeutung von $Q^1$ hat oder für Ac-O steht, worin $Q^1$, Ac und $Z^2$ wie vorstehend definiert sind, $Z^3$ für $Z^2$ steht oder die Bedeutung von $Q^2$ hat und m den Wert 0 bis 4 aufweist,

c) eine fluorhaltige Vinylkomponente der Formel IIIa

$Ac\text{-}O\text{-}R^5\text{-}R^6$

worin Ac wie vorstehend definiert ist, $R^5$ für $C_1$-$C_4$-Alkylen oder Cycloalkylen steht, $R^6$ fluoriertes Niederalkyl mit mindestens 3 Fluoratomen bedeutet oder worin $R^5$-$R^6$ zusammen für Hexafluorisopropyl oder Nonafluor-tert.-butyl steht,

oder der Formel IIIb

$Ac\text{-}O\text{-}R^5\text{-}R^7\text{-}R^5\text{-}O\text{-}Ac$

worin Ac und $R^5$ wie vorstehend definiert sind und $R^7$ fluoriertes $C_1$-$C_{10}$-Alkylen bedeutet,

oder der Formel IIIc

Ac-O-$R^8$-$C(CF_3)_2$-$R^8$-O-Ac

worin Ac wie vorstehend definiert ist und $R^8$ für unsubstituiertes oder durch Niederalkyl, Fluor oder fluoriertes Niederalkyl mit mindestens 3 Fluoratomen substituiertes Phenylen steht,
oder der Formel IIId

$R^9$-$(CH_2)_p$-CH(OAc)-$CH_2$-OAc

worin Ac wie vorstehend definiert ist, $R^9$ perfluoriertes $C_1$-$C_{10}$-Alkyl bedeutet und p den Wert 0, 1 oder 2 hat,
oder der Formel IIIe

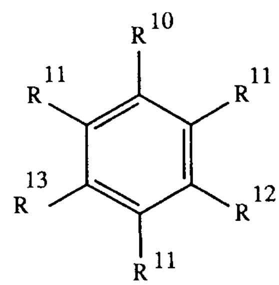

worin $R^{10}$ $C_2$-$C_6$-Alkenyl mit der Doppelbindung in Konjugation zum Phenylring bedeutet, die Reste $R^{11}$ unabhängig voneinander Wasserstoff oder Fluor bedeuten, $R^{12}$ für fluoriertes Niederalkyl mit mindestens 3 Fluoratomen steht und $R^{13}$ Wasserstoff oder Fluor ist oder die Bedeutung von $R^{12}$ hat, und
d) eine hydrophobe Vinylkomponente mit sperrigem Kohlenwasserstoffrest wie in Anspruch 1 definiert.

**3.** Polymer gemäss Anspruch 2, dadurch gekennzeichnet, dass die Komponente a) ausgewählt ist unter Verbindungen der Formel I, worin Ac der Acylrest einer vinylisch ungesättigten Carbonsäure mit drei oder 4 Kohlenstoffatomen ist, $R^1$ Niederalkylen bedeutet, n für 0 steht, $Z^2$ die Bedeutung von $Z^1$ hat und $Z^1$ unabhängig voneinander $OSi(R^4)_3$ bedeutet, worin $R^4$ unabhängig voneinander Niederalkyl oder $OSi(Niederalkyl)_3$ ist.

**4.** Polymer gemäss Anspruch 2, dadurch gekennzeichnet, dass die Komponente b) ausgewählt ist unter Verbindungen der Formel II, worin $Q^2$ für $Q^1$ steht, worin n 0 bedeutet, worin ferner Ac der Acylrest einer vinylisch ungesättigten Carbonsäure mit 3 oder 4 Kohlenstoffatomen ist, $R^1$ für Niederalkylen steht, m für 0 steht und $Z^2$ unabhängig voneinander für Niederalkyl oder $OSi(R^4)_3$ steht, worin $R^4$ Niederalkyl ist.

**5.** Polymer gemäss Anspruch 2, dadurch gekennzeichnet, dass die Komponente c) ausgewählt ist unter Verbindungen der Formel IIIa, b, c, d oder e, worin Ac der Acylrest einer vinylisch ungesättigten Carbonsäure mit 3 oder 4 Kohlenstoffatomen ist, $R^5$ $C_1$-$C_3$-Alkylen und $R^6$ fluoriertes Niederalkyl mit mindestens 3 Fluoratomen bedeuten oder $R^5$-$R^6$ zusammen für Hexafluorisopropyl oder Nonafluor-tert.-butyl steht, $R^7$ fluoriertes Niederalkylen bedeutet, $R^8$ für Phenylen steht, p 1 bedeutet, $R^9$ für perfluoriertes $C_4$-$C_8$-Alkyl steht, $R^{10}$ $C_2$-$C_3$-Alkenyl bedeutet, $R^{11}$ und $R^{13}$ für Wasserstoff stehen und $R^{12}$ fluoriertes Niederalkyl mit mindestens 3 Fluoratomen bedeutet.

**6.** Polymer gemäss Anspruch 2, dadurch gekennzeichnet, dass die Komponente d) ausgewählt ist unter Verbindungen der Formel IVa, worin Ac der Acylrest einer vinylisch ungesättigten Carbonsäure mit 3 oder 4 Kohlenstoffatomen ist und $R^{14}$ durch Niederalkyl substituiertes Cycloalkyl, unsubstituiertes oder durch Niederalkyl substituiertes Di- oder Tricycloalkyl, unsubstituiertes oder durch Niederalkyl substituiertes Bicycloalkylniederalkyl oder Tricycloalkylniederalkyl oder durch tert.-Butyl substituiertes $C_1$-$C_4$-Alkyl ist oder unter Verbindungen der Formel IVb, worin $R^{15}$ $C_2$-$C_3$-Alkenyl bedeutet und $R^{16}$ für

Wasserstoff steht oder durch Niederalkyl substituiertes Cycloalkyl, unsubstituiertes oder durch Niederalkyl substituiertes Di- oder Tricycloalkyl, unsubstituiertes oder durch Niederalkyl substituiertes Bicycloalkylniederalkyl oder Tricycloalkylniederalkyl oder durch tert.-Butyl substituiertes $C_1$-$C_4$-Alkyl ist, wobei jedoch mindestens ein $R^{16}$ von Wasserstoff verschieden ist.

**7.** Polymer gemäss Anspruch 1, dadurch gekennzeichnet, dass die Komponente e) ausgewählt ist unter durch Hydroxy substituierten $C_2$-$C_4$-Alkyl(meth)acrylaten, fünf- bis siebengliedrigen N-Vinyllactamen, N,N-Di-$C_1$-$C_4$-alkyl(meth)acrylamiden und vinylisch ungesättigten Carbonsäuren mit insgesamt 3 bis 5 Kohlenstoffatomen.

**8.** Polymer gemäss Anspruch 1, dadurch gekennzeichnet, dass die Komponente f) ausgewählt ist unter Macromeren der Formel Va,

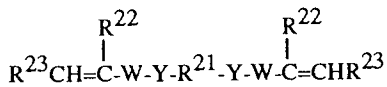

(Va),

worin $R^{21}$ eine Polysiloxankette mit einem Molekulargewicht von ca. 400 bis ca. 8000 darstellt, und die Formel

$$-R^{26}\left[SiO(CH_3)_2\right]_k Si(CH_3)_2\text{-}R^{26}\text{-}$$

besitzt,
$R^{22}$ Wasserstoff oder Methyl bedeutet,
$R^{23}$ Wasserstoff oder $-COOR^{24}$ bedeutet,
$R^{24}$ Wasserstoff oder Alkyl mit 1 bis 10 Kohlenstoffatomen bedeutet, unter der Voraussetzung, dass zumindest einer der Reste $R^{22}$ und $R^{23}$ Wasserstoff ist,
W -O-, -COO- oder $-CONR^{25}-$ bedeutet,
$R^{25}$ Wasserstoff oder Alkyl mit 1 bis 5 Kohlenstoffatomen bedeutet,
$R^{26}$ verzweigtes oder lineares Alkylen mit 1 bis 7 Kohlenstoffatomen oder $(CH_2CH_2O)_qCH_2CH_2$ bedeutet, worin q für eine Zahl von 1 bis 20 steht,
k eine ganze Zahl von 3 bis 120 bedeutet,
Y eine direkte Bindung oder den zweiwertigen Rest $-R^{27}-X^3-CONH-R^{28}-NHCO-X^4-$darstellt,
$R^{27}$ ein an W gebundenes lineares oder verzweigtes unsubstituiertes oder durch Diniederalkylamino oder Hydroxy substituiertes Alkylen mit 2 bis 5 Kohlenstoffatomen bedeutet,
$R^{28}$ einen zweiwertigen Rest darstellt, der durch Entfernen der NCO-Gruppen aus einem aliphatischen, cycloaliphatischen oder aromatischen Diisocyanat erhalten wird,
$X^3$ -O- oder $-NR^{25}-$ bedeutet,
$X^4$ die Bedeutung von $X^3$ besitzt oder -S- bedeutet und an $R^{26}$ gebunden ist, unter der Voraussetzung, dass, wenn W -O- bedeutet, Y von einer direkten Bindung verschieden ist, und $R^{22}$ und $R^{23}$ Wasserstoff bedeuten,
und unter Macromeren der Formel Vb,

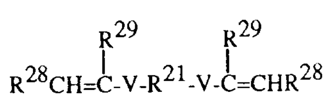

(Vb)

worin $R^{28}$ und $R^{29}$ unabhängig voneinander Wasserstoff oder Methyl bedeuten, V den zweiwertigen Rest $-R^{30}-R^{31}-NHCO-X^4-$ darstellt, der über $X^4$ an $R^{21}$ gebunden ist und worin $R^{30}$ für Phenylen oder durch Niederalkyl substituiertes Phenylen steht, $R^{31}$ eine Bindung oder Niederalkylen bedeutet, und worin $R^{21}$ und $X^4$ die vorstehend angegebenen Bedeutungen aufweisen.

**9.** Polymer gemäss Anspruch 1, dadurch gekennzeichnet, dass die Monomerenmischung die Komponenten a) bis f) in folgenden Mengen enthält:
a) 40-45 Gew.%
b) 5-10 Gew.%
c) 29-40 Gew.%
d) 3-15 Gew.%
e) falls anwesend, 5-10 Gew.%
f) falls anwesend, 5-10 Gew.%.

**10.** Polymer gemäss Anspruch 1, dadurch gekennzeichnet, dass die Monomerenmischung die Komponenten a) bis f) in folgenden Mengen enthält:
a) 35-40 Gew.%
b) 5-10 Gew.%
c) 29-35 Gew.%
d) 3-10 Gew.%
e) 8-10 Gew.%
f) 8-10 Gew.%.

**11.** Polymer gemäss Anspruch 9 oder 10, dadurch gekennzeichnet, dass die Komponenten a) bis f) ausgewählt sind unter
Verbindungen der Formel I, worin Ac für Acryloyl oder Methacryloyl steht, $R^1$ $C_2$-$C_4$-Alkylen bedeutet, n für 0 steht, $Z^2$ die Bedeutung von $Z^1$ hat und $Z^1$ $OSi(R^4)_3$ bedeutet, worin $R^4$ $C_1$-$C_4$-Alkyl oder $OSi(C_1$-$C_4$-Alkyl$)_3$ ist,
Verbindungen der Formel II, worin $Q^2$ für $Q^1$ steht, worin n 0 bedeutet, worin ferner Ac Acryloyl oder Methacryloyl bedeutet, $R^1$ für $C_1$-$C_4$-Alkylen steht und $Z^2$ $C_1$-$C_4$-Alkyl oder $OSi(R^4)_3$ bedeutet, worin $R^4$ für $C_1$-$C_4$-Alkyl steht,
Verbindungen der Formel IIIa, worin Ac für Acryloyl oder Methacryloyl steht, $R^5$ $C_1$-$C_2$-Alkylen und $R^6$ fluoriertes $C_1$-$C_4$-Alkyl mit mindestens 3 Fluoratomen bedeuten oder $R^5$-$R^6$ zusammen für Hexafluorisopropyl steht,
Verbindungen der Formel IIIb, worin Ac für Acryloyl oder Methacryloyl steht, $R^5$ $C_1$-$C_2$-Alkylen und $R^7$ fluoriertes $C_1$-$C_4$-Alkylen bedeutet, Verbindungen der Formel IIIc, worin Ac für Acryloyl oder Methacryloyl steht, und $R^8$ Phenylen bedeutet, Verbindungen der Formel IIId, worin Ac für Acryloyl oder Methacryloyl steht, p für 1 steht und $R^9$ perfluoriertes $C_5$-$C_7$-Alkyl bedeutet und Verbindungen der Formel IIIe, worin $R^{10}$ Vinyl oder 1-Methylvinyl bedeutet, $R^{11}$ und $R^{13}$ für Wasserstoff stehen und $R^{12}$ fluoriertes $C_1$-$C_4$-Alkyl mit mindestens 3 Fluoratomen bedeutet,
Verbindungen der Formel IVa, worin Ac für Acryloyl oder Methacryloyl steht und $R^{14}$ durch $C_1$-$C_4$-Alkyl substituiertes Cyclohexyl, unsubstituiertes oder durch $C_1$-$C_4$-Alkyl substituiertes $C_7$-$C_{12}$-Bi- oder Tricycloalkyl, unsubstituiertes oder durch $C_1$-$C_4$-Alkyl substituiertes $C_7$-$C_{12}$-Bi- oder Tricycloalkyl-$C_1$-$C_4$-alkyl oder durch tert.-Butyl substituiertes $C_1$-$C_4$-Alkyl ist,
durch Hydroxy substituierten $C_2$-$C_4$-Alkyl(meth)acrylaten, fünf- bis siebengliedrigen N-Vinyllactamen, N,N-Di-$C_1$-$C_4$-alkyl(meth)acrylamiden und vinylisch ungesättigten Carbonsäuren mit insgesamt 3 bis 5 Kohlenstoffatomen und
Verbindungen der Formel Va, abgeleitet von einem Polysiloxandiol mit einem Molekulargewicht von ca. 400 bis ca. 8000, das zuerst mit Isophorondiisocyanat oder Tolylen-2,4-diisocyanat endständig abgeschlossen wurde, und dann mit einer Hydroxyverbindung, ausgewählt unter den Hydroxyalkylestern, worin Alkyl 2 bis 4 Kohlenstoffatome aufweist, der Acrylsäure, Methacrylsäure, Maleinsäure und Fumarsäure, und den Hydroxyalkylvinylethern, worin Alkyl 2 bis 4 Kohlenstoffatome aufweist, umgesetzt wurde.

**12.** Verfahren zur Herstellung eines Polymeren nach Anspruch 1, dadurch gekennzeichnet, dass die Monomere auf an sich bekannte Weise copolymerisiert werden.

**13.** Kontaktlinse bestehend im wesentlichen aus einem Polymeren nach Anspruch 1.

**14.** Verfahren zur Herstellung einer Kontaktlinse nach Anspruch 13 aus einem Polymer nach Anspruch 1 auf an sich bekannte Weise.

**15.** Verwendung eines Polymeren nach Anspruch 1 zur Herstellung einer Kontaktlinse.

**Patentansprüche für folgenden Vertragsstaat : ES**

1. Verfahren zur Herstellung von Polymeren, bei denen es sich um die Copolymerisationsprodukte von Monomermischungen handelt, die folgende Monomere enthalten:
   a) 20-60 Gew.% Siloxanmonovinylkomponente
   b) 1-25 Gew.% Siloxanoligovinylkomponente
   c) 10-55 Gew.% fluorhaltige Vinylkomponente
   d) 3-30 Gew.% hydrophobe Vinylkomponente mit sperrigem Kohlenwasserstoffrest
   e) 0-10 Gew.% hydrophile Vinylkomponente
   f) 0-15 Gew.% zusätzliche vernetzende Vinylkomponente,

   wobei es sich bei der hydrophoben Vinylkomponente mit sperrigem Kohlenwasserstoffrest um eine Verbindung der Formel IVa handelt

   $Ac\text{-}O\text{-}R^{14}$

   worin Ac der Acylrest einer vinylisch ungesättigten Carbonsäure mit 3-5 Kohlenstoffatomen ist und $R^{14}$ durch Niederalkyl substituiertes Cycloalkyl, durch Niederalkyl substituiertes Cycloalkylniederalkyl, unsubstituiertes oder durch Niederalkyl substituiertes Di- oder Oligocycloalkyl, unsubstituiertes oder durch Niederalkyl substituiertes Di- oder Oligocycloalkyl-niederalkyl oder mindestens eine tert.-Butylgruppe enthaltendes $C_5$-$C_{10}$-Alkyl bedeutet, welches unsubstituiert oder durch Cycloalkyl substituiert ist,
   oder um eine Verbindung der Formel IVb

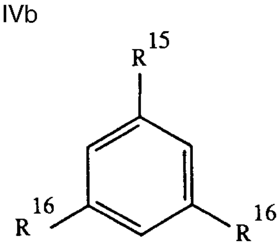

   worin $R^{15}$ $C_2$-$C_6$-Alkenyl mit der Doppelbindung in Konjugation zum Phenylring bedeutet und $R^{16}$ für Wasserstoff steht oder die Bedeutung von $R^{14}$ hat, wobei jedoch mindestens ein $R^{16}$ von Wasserstoff verschieden ist,
   dadurch gekennzeichnet, dass die Monomere auf an sich bekannte Weise copolymerisiert werden.

2. Verfahren gemäss Anspruch 1, dadurch gekennzeichnet, dass die Monomermischung die folgenden Monomere enthält:
   a) eine Siloxanmonovinylkomponente der Formel I

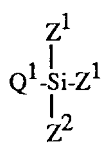

   worin $Q^1$ für den Rest der Teilformel

   $Ac\text{-}O\text{-}R^1\{A\text{-}R^2\text{-}A'\text{-}R^3\}_n$

   steht, Ac der Acylrest einer vinylisch ungesättigten Carbonsäure mit 3-5 Kohlenstoffatomen ist, $R^1$ und $R^2$ unabhängig voneinander Niederalkylen, Cycloalkylen, Arylen oder eine Kombination von Niederalkylen mit Cycloalkylen oder Niederalkylen mit Arylen bedeuten, $R^3$ für Niederalkylen oder Cycloalkylen steht, A und A' unabhängig voneinander $X^1$-CO-$X^2$ bedeuten, wobei jeweils $X^2$ an $R^2$ gebunden ist, und $X^2$ für -NH- oder eine Bindung und $X^1$ für -O-, oder -NR-, worin R Niederalkyl bedeutet, stehen, worin die Reste $Z^1$ unabhängig voneinander $OSi(R^4)_3$ bedeuten, worin $R^4$ unabhängig voneinander für Niederalkyl, Phenyl oder $OSi(Niederalkyl)_3$ steht, $Z^2$ Niederalkyl, Phenyl oder $Z^1$ bedeutet und n den Wert 0 oder 1 hat,

b) eine Siloxanoligovinylkomponente der Formel II

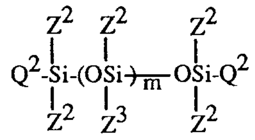

worin $Q^2$ die Bedeutung von $Q^1$ hat oder für Ac-O steht, worin $Q^1$, Ac und $Z^2$ wie vorstehend definiert sind, $Z^3$ für $Z^2$ steht oder die Bedeutung von $Q^2$ hat und m den Wert 0 bis 4 aufweist,

c) eine fluorhaltige Vinylkomponente der Formel IIIa

Ac-O-$R^5$-$R^6$

worin Ac wie vorstehend definiert ist, $R^5$ für $C_1$-$C_4$-Alkylen oder Cycloalkylen steht, $R^6$ fluoriertes Niederalkyl mit mindestens 3 Fluoratomen bedeutet oder worin $R^5$-$R^6$ zusammen für Hexafluorisopropyl oder Nonafluor-tert.-butyl steht,
oder der Formel IIIb

Ac-O-$R^5$-$R^7$-$R^5$-O-Ac

worin Ac und $R^5$ wie vorstehend definiert sind und $R^7$ fluoriertes $C_1$-$C_{10}$-Alkylen bedeutet,
oder der Formel IIIc

Ac-O-$R^8$-$C(CF_3)_2$-$R^8$-O-Ac

worin Ac wie vorstehend definiert ist und $R^8$ für unsubstituiertes oder durch Niederalkyl, Fluor oder fluoriertes Niederalkyl mit mindestens 3 Fluoratomen substituiertes Phenylen steht,
oder der Formel IIId

$R^9$-$(CH_2)_p$-CH(OAc)-$CH_2$-OAc

worin Ac wie vorstehend definiert ist, $R^9$ perfluoriertes $C_1$-$C_{10}$-Alkyl bedeutet und p den Wert 0, 1 oder 2 hat,
oder der Formel IIIe

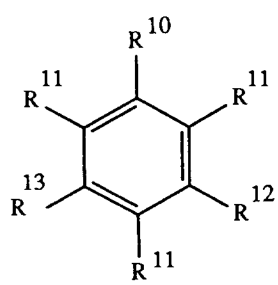

worin $R^{10}$ $C_2$-$C_6$-Alkenyl mit der Doppelbindung in Konjugation zum Phenylring bedeutet, die Reste $R^{11}$ unabhängig voneinander Wasserstoff oder Fluor bedeuten, $R^{12}$ für fluoriertes Niederalkyl mit mindestens 3 Fluoratomen steht und $R^{13}$ Wasserstoff oder Fluor ist oder die Bedeutung von $R^{12}$ hat, und

d) eine hydrophobe Vinylkomponente mit sperrigem Kohlenwasserstoffrest wie in Anspruch 1 definiert.

**3.** Verfahren gemäss Anspruch 2, dadurch gekennzeichnet, dass die Komponente a) ausgewählt ist unter Verbindungen der Formel I, worin Ac der Acylrest einer vinylisch ungesättigten Carbonsäure mit drei oder 4 Kohlenstoffatomen ist, $R^1$ Niederalkylen bedeutet, n für 0 steht, $Z^2$ die Bedeutung von $Z^1$ hat und $Z^1$ unabhängig voneinander $OSi(R^4)_3$ bedeutet, worin $R^4$ unabhängig voneinander Niederalkyl oder

$OSi(Niederalkyl)_3$ ist.

**4.** Verfahren gemäss Anspruch 2, dadurch gekennzeichnet, dass die Komponente b) ausgewählt ist unter Verbindungen der Formel II, worin $Q^2$ für $Q^1$ steht, worin n 0 bedeutet, worin ferner Ac der Acylrest einer vinylisch ungesättigten Carbonsäure mit 3 oder 4 Kohlenstoffatomen ist, $R^1$ für Niederalkylen steht, m für 0 steht und $Z^2$ unabhängig voneinander für Niederalkyl oder $OSi(R^4)_3$ steht, worin $R^4$ Niederalkyl ist.

**5.** Verfahren gemäss Anspruch 2, dadurch gekennzeichnet, dass die Komponente c) ausgewählt ist unter Verbindungen der Formel IIIa, b, c, d oder e, worin Ac der Acylrest einer vinylisch ungesättigten Carbonsäure mit 3 oder 4 Kohlenstoffatomen ist, $R^5$ $C_1$-$C_3$-Alkylen und $R^6$ fluoriertes Niederalkyl mit mindestens 3 Fluoratomen bedeuten oder $R^5$-$R^6$ zusammen für Hexafluorisopropyl oder Nonafluor-tert.-butyl steht, $R^7$ fluoriertes Niederalkylen bedeutet, $R^8$ für Phenylen steht, p 1 bedeutet, $R^9$ für perfluoriertes $C_4$-$C_8$-Alkyl steht, $R^{10}$ $C_2$-$C_3$-Alkenyl bedeutet, $R^{11}$ und $R^{13}$ für Wasserstoff stehen und $R^{12}$ fluoriertes Niederalkyl mit mindestens 3 Fluoratomen bedeutet.

**6.** Verfahren gemäss Anspruch 2, dadurch gekennzeichnet, dass die Komponente d) ausgewählt ist unter Verbindungen der Formel IVa, worin Ac der Acylrest einer vinylisch ungesättigten Carbonsäure mit 3 oder 4 Kohlenstoffatomen ist und $R^{14}$ durch Niederalkyl substituiertes Cycloalkyl, unsubstituiertes oder durch Niederalkyl substituiertes Di- oder Tricycloalkyl, unsubstituiertes oder durch Niederalkyl substituiertes Bicycloalkylniederalkyl oder Tricycloalkylniederalkyl oder durch tert.-Butyl substituiertes $C_1$-$C_4$-Alkyl ist oder unter Verbindungen der Formel IVb, worin $R^{15}$ $C_2$-$C_3$-Alkenyl bedeutet und $R^{16}$ für Wasserstoff steht oder durch Niederalkyl substituiertes Cycloalkyl, unsubstituiertes oder durch Niederalkyl substituiertes Di- oder Tricycloalkyl, unsubstituiertes oder durch Niederalkyl substituiertes Bicycloalkylniederalkyl oder Tricycloalkylniederalkyl oder durch tert.-Butyl substituiertes $C_1$-$C_4$-Alkyl ist, wobei jedoch mindestens ein $R^{16}$ von Wasserstoff verschieden ist.

**7.** Verfahren gemäss Anspruch 1, dadurch gekennzeichnet, dass die Komponente e) ausgewählt ist unter durch Hydroxy substituierten $C_2$-$C_4$-Alkyl(meth)acrylaten, fünf- bis siebengliedrigen N-Vinyllactamen, N,N-Di-$C_1$-$C_4$-alkyl(meth)acrylamiden und vinylisch ungesättigten Carbonsäuren mit insgesamt 3 bis 5 Kohlenstoffatomen.

**8.** Verfahren gemäss Anspruch 1, dadurch gekennzeichnet, dass die Komponente f) ausgewählt ist unter Macromeren der Formel Va,

$$R^{23}CH=\overset{\overset{\large R^{22}}{|}}{C}\text{-W-Y-}R^{21}\text{-Y-W-}\overset{\overset{\large R^{22}}{|}}{C}=CHR^{23} \qquad (Va),$$

worin $R^{21}$ eine Polysiloxankette mit einem Molekulargewicht von ca. 400 bis ca. 8000 darstellt, und die Formel

$$-R^{26}\left[SiO(CH_3)_2\right]_k Si(CH_3)_2\text{-}R^{26}\text{-}$$

besitzt,
$R^{22}$ Wasserstoff oder Methyl bedeutet,
$R^{23}$ Wasserstoff oder $-COOR^{24}$ bedeutet,
$R^{24}$ Wasserstoff oder Alkyl mit 1 bis 10 Kohlenstoffatomen bedeutet, unter der Voraussetzung, dass zumindest einer der Reste $R^{22}$ und $R^{23}$ Wasserstoff ist,
W -O-, -COO- oder $-CONR^{25}$- bedeutet,
$R^{25}$ Wasserstoff oder Alkyl mit 1 bis 5 Kohlenstoffatomen bedeutet,
$R^{26}$ verzweigtes oder lineares Alkylen mit 1 bis 7 Kohlenstoffatomen oder $(CH_2CH_2O)_qCH_2CH_2$ bedeutet, worin q für eine Zahl von 1 bis 20 steht,
k eine ganze Zahl von 3 bis 120 bedeutet,

Y eine direkte Bindung oder den zweiwertigen Rest $-R^{27}-X^3-CONH-R^{28}-NHCO-X^4-$darstellt,
$R^{27}$ ein an W gebundenes lineares oder verzweigtes unsubstituiertes oder durch Diniederalkylamino oder Hydroxy substituiertes Alkylen mit 2 bis 5 Kohlenstoffatomen bedeutet,
$R^{28}$ einen zweiwertigen Rest darstellt, der durch Entfernen der NCO-Gruppen aus einem aliphatischen, cycloaliphatischen oder aromatischen Diisocyanat erhalten wird,
$X^3$ -O- oder $-NR^{25}-$ bedeutet,
$X^4$ die Bedeutung von $X^3$ besitzt oder -S- bedeutet und an $R^{26}$ gebunden ist, unter der Voraussetzung, dass, wenn W -O- bedeutet, Y von einer direkten Bindung verschieden ist, und $R^{22}$ und $R^{23}$ Wasserstoff bedeuten,
und unter Macromeren der Formel Vb,

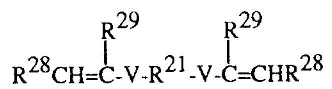

(Vb)

worin $R^{28}$ und $R^{29}$ unabhängig voneinander Wasserstoff oder Methyl bedeuten, V den zweiwertigen Rest $-R^{30}-R^{31}-NHCO-X^4-$ darstellt, der über $X^4$ an $R^{21}$ gebunden ist und worin $R^{30}$ für Phenylen oder durch Niederalkyl substituiertes Phenylen steht, $R^{31}$ eine Bindung oder Niederalkylen bedeutet, und worin $R^{21}$ und $X^4$ die vorstehend angegebenen Bedeutungen aufweisen.

**9.** Verfahren gemäss Anspruch 1, dadurch gekennzeichnet, dass die Monomerenmischung die Komponenten a) bis f) in folgenden Mengen enthält:
a) 40-45 Gew.%
b) 5-10 Gew.%
c) 29-40 Gew.%
d) 3-15 Gew.%
e) falls anwesend, 5-10 Gew.%
f) falls anwesend, 5-10 Gew.%.

**10.** Verfahren gemäss Anspruch 1, dadurch gekennzeichnet, dass die Monomerenmischung die Komponenten a) bis f) in folgenden Mengen enthält:
a) 35-40 Gew.%
b) 5-10 Gew.%
c) 29-35 Gew.%
d) 3-10 Gew.%
e) 8-10 Gew.%
f) 8-10 Gew.%.

**11.** Verfahren gemäss Anspruch 9 oder 10, dadurch gekennzeichnet, dass die Komponenten a) bis f) ausgewählt sind unter
Verbindungen der Formel I, worin Ac für Acryloyl oder Methacryloyl steht, $R^1$ $C_2$-$C_4$-Alkylen bedeutet, n für 0 steht, $Z^2$ die Bedeutung von $Z^1$ hat und $Z^1$ $OSi(R^4)_3$ bedeutet, worin $R^4$ $C_1$-$C_4$-Alkyl oder $OSi(C_1$-$C_4$-Alkyl$)_3$ ist,
Verbindungen der Formel II, worin $Q^2$ für $Q^1$ steht, worin n 0 bedeutet, worin ferner Ac Acryloyl oder Methacryloyl bedeutet, $R^1$ für $C_1$-$C_4$-Alkylen steht und $Z^2$ $C_1$-$C_4$-Alkyl oder $OSi(R^4)_3$ bedeutet, worin $R^4$ für $C_1$-$C_4$-Alkyl steht,
Verbindungen der Formel IIIa, worin Ac für Acryloyl oder Methacryloyl steht, $R^5$ $C_1$-$C_2$-Alkylen und $R^6$ fluoriertes $C_1$-$C_4$-Alkyl mit mindestens 3 Fluoratomen bedeuten oder $R^5$-$R^6$ zusammen für Hexafluorisopropyl steht,
Verbindungen der Formel IIIb, worin Ac für Acryloyl oder Methacryloyl steht, $R^5$ $C_1$-$C_2$-Alkylen und $R^7$ fluoriertes $C_1$-$C_4$-Alkylen bedeutet, Verbindungen der Formel IIIc, worin Ac für Acryloyl oder Methacryloyl steht, und $R^8$ Phenylen bedeutet, Verbindungen der Formel IIId, worin Ac für Acryloyl oder Methacryloyl steht, p für 1 steht und $R^9$ perfluoriertes $C_5$-$C_7$-Alkyl bedeutet und Verbindungen der Formel IIIe, worin $R^{10}$ Vinyl oder 1-Methylvinyl bedeutet, $R^{11}$ und $R^{13}$ Für Wasserstoff stehen und $R^{12}$ fluoriertes $C_1$-$C_4$-Alkyl mit mindestens 3 Fluoratomen bedeutet,
Verbindungen der Formel IVa, worin Ac für Acryloyl oder Methacryloyl steht und $R^{14}$ durch $C_1$-$C_4$-Alkyl substituiertes Cyclohexyl, unsubstituiertes oder durch $C_1$-$C_4$-Alkyl substituiertes $C_7$-$C_{12}$-Bi- oder Tricy-

cloalkyl, unsubstituiertes oder durch $C_1$-$C_4$-Alkyl substituiertes $C_7$-$C_{12}$-Bi- oder Tricycloalkyl-$C_1$-$C_4$-alkyl oder durch tert.-Butyl substituiertes $C_1$-$C_4$-Alkyl ist,
durch Hydroxy substituierten $C_2$-$C_4$-Alkyl(meth)acrylaten, fünf- bis siebengliedrigen N-Vinyllactamen, N,N-Di-$C_1$-$C_4$-alkyl(meth)acrylamiden und vinylisch ungesättigten Carbonsäuren mit insgesamt 3 bis 5 Kohlenstoffatomen und
Verbindungen der Formel Va, abgeleitet von einem Polysiloxandiol mit einem Molekulargewicht von ca. 400 bis ca. 8000, das zuerst mit Isophorondiisocyanat oder Tolylen-2,4-diisocyanat endständig abgeschlossen wurde, und dann mit einer Hydroxyverbindung, ausgewählt unter den Hydroxyalkylestern, worin Alkyl 2 bis 4 Kohlenstoffatome aufweist, der Acrylsäure, Methacrylsäure, Maleinsäure und Fumarsäure, und den Hydroxyalkylvinylethern, worin Alkyl 2 bis 4 Kohlenstoffatome aufweist, umgesetzt wurde.

**12.** Kontaktlinse bestehend im wesentlichen aus einem Polymeren nach Anspruch 1.

**13.** Verfahren zur Herstellung einer Kontaktlinse nach Anspruch 12 aus einem Polymer nach Anspruch 1 auf an sich bekannte Weise.

**14.** Verwendung eines Polymeren nach Anspruch 1 zur Herstellung einer Kontaktlinse.

## Claims

**Claims for the following Contracting States : AT, BE, CH, LI, DE, DK, FR, GB, GR, IT, LU, NL, SE.**

**1.** A polymer that is a copolymerisation product of a monomer mixture comprising the following monomers:
a) 20-60 % by weight siloxane monovinyl component
b) 1-25 % by weight siloxane oligovinyl component
c) 10-55 % by weight fluorine-containing vinyl component
d) 3-30 % by weight hydrophobic vinyl component having a bulky hydrocarbon radical
e) 0-10 % by weight hydrophilic vinyl component
f) 0-15 % by weight additional cross-linking vinyl component,
the hydrophobic vinyl component having a bulky hydrocarbon radical being a compound of formula IVa

$$Ac\text{-}O\text{-}R^{14}$$

wherein Ac is the acyl radical of a vinylically unsaturated carboxylic acid having from 3 to 5 carbon atoms and $R^{14}$ is lower alkyl-substituted cycloalkyl, lower alkyl-substituted cycloalkyl-lower alkyl, unsubstituted or lower alkyl-substituted di- or oligo-cycloalkyl, unsubstituted or lower alkyl-substituted di- or oligo-cycloalkyl-lower alkyl, or $C_5$-$C_{10}$alkyl that contains at least one tert-butyl group and is unsubstituted or substituted by cycloalkyl,
or a compound of formula IVb

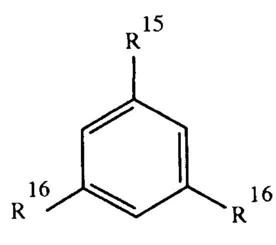

wherein $R^{15}$ is $C_2$-$C_6$alkenyl having the double bond in conjugation to the phenyl ring and $R^{16}$ is hydrogen or has the same meaning as $R^{14}$, but at least one radical $R^{16}$ is other than hydrogen.

**2.** A polymer according to claim 1, wherein the monomer mixture comprises the following monomers:
a) a siloxane monovinyl component of formula I

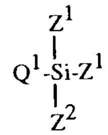

wherein $Q^1$ is a radical of the partial formula

$$Ac\text{-}O\text{-}R^1\{A\text{-}R^2\text{-}A'\text{-}R^3\}_n$$

Ac is the acyl radical of a vinylically unsaturated carboxylic acid having from 3 to 5 carbon atoms, $R^1$ and $R^2$ are each independently of the other lower alkylene, cycloalkylene, arylene or a combination of lower alkylene with cycloalkylene or lower alkylene with arylene, $R^3$ is lower alkylene or cycloalkylene, A and A' are each independently of the other $X^1$-CO-$X^2$, $X^2$ in each case being bonded to $R^2$, and $X^2$ is -NH- or a bond and $X^1$ is -O-, or -NR- wherein R is lower alkyl, wherein the radicals $Z^1$ are each independently of the other $OSi(R^4)_3$ wherein the radicals $R^4$ are each independently of the others lower alkyl, phenyl or OSi(lower alkyl)$_3$, $Z^2$ is lower alkyl, phenyl or $Z^1$, and n is 0 or 1,

b) a siloxane oligovinyl component of formula II

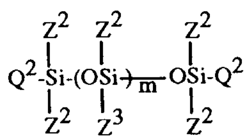

wherein $Q^2$ has the same meaning as $Q^1$ or is Ac-O, wherein $Q^1$, Ac and $Z^2$ are as defined above, $Z^3$ is $Z^2$ or has the same meaning as $Q^2$ and m is 0 to 4,

c) a fluorine-containing vinyl component of formula IIIa

$$Ac\text{-}O\text{-}R^5\text{-}R^6$$

wherein Ac is as defined above, $R^5$ is $C_1$-$C_4$alkylene or cycloalkylene, $R^6$ is fluorinated lower alkyl having at least 3 fluorine atoms or wherein $R^5$-$R^6$ together are hexafluoroisopropyl or nonafluoro-tert-butyl,

or of formula IIIb

$$Ac\text{-}O\text{-}R^5\text{-}R^7\text{-}R^5\text{-}O\text{-}Ac$$

wherein Ac and $R^5$ are as defined above and $R^7$ is fluorinated $C_1$-$C_{10}$alkylene, or of formula IIIc

$$Ac\text{-}O\text{-}R^8\text{-}C(CF_3)_2\text{-}R^8\text{-}O\text{-}Ac$$

wherein Ac is as defined above and $R^8$ is phenylene that is unsubstituted or substituted by lower alkyl, fluorine or by fluorinated lower alkyl having at least 3 fluorine atoms, or of formula IIId

$$R^9\text{-}(CH_2)_p\text{-}CH(OAC)\text{-}CH_2\text{-}OAC$$

wherein Ac is as defined above, $R^9$ is perfluorinated $C_1$-$C_{10}$alkyl and p is 0, 1 or 2, or of formula IIIe

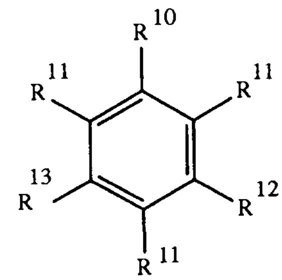

wherein $R^{10}$ is $C_2$-$C_6$alkenyl having the double bond in conjugation to the phenyl ring, the radicals $R^{11}$ are each independently of the others hydrogen or fluorine, $R^{12}$ is fluorinated lower alkyl having at least 3 fluorine atoms and $R^{13}$ is hydrogen or fluorine or has the same meaning as $R^{12}$, and
d) a hydrophobic vinyl component having a bulky hydrocarbon radical as defined in claim 1.

**3.** A polymer according to claim 2, wherein component a) is selected from compounds of formula I wherein Ac is the acyl radical of a vinylically unsaturated carboxylic acid having three or four carbon atoms, $R^1$ is lower alkylene, n is 0, $Z^2$ has the same meaning as $Z^1$ and the radicals $Z^1$ are each independently of the other $OSi(R^4)_3$ wherein the radicals $R^4$ are each independently of the others lower alkyl or OSi(lower alkyl)$_3$.

**4.** A polymer according to claim 2, wherein component b) is selected from compounds of formula II wherein $Q^2$ is $Q^1$, wherein n is 0, and wherein Ac is the acyl radical of a vinylically unsaturated carboxylic acid having 3 or 4 carbon atoms, $R^1$ is lower alkylene, m is 0 and the radicals $Z^2$ are each independently of the others lower alkyl or $OSi(R^4)_3$ wherein $R^4$ is lower alkyl.

**5.** A polymer according to claim 2, wherein component c) is selected from compounds of formula IIIa, b, c, d or e wherein Ac is the acyl radical of a vinylically unsaturated carboxylic acid having 3 or 4 carbon atoms, $R^5$ is $C_1$-$C_3$alkylene and $R^6$ is fluorinated lower alkyl having at least 3 fluorine atoms, or $R^5$-$R^6$ together are hexafluoroisopropyl or nonafluoro-tert-butyl, $R^7$ is fluorinated lower alkylene, $R^8$ is phenylene, p is 1, $R^9$ is perfluorinated $C_4$-$C_8$alkyl, $R^{10}$ is $C_2$-$C_3$alkenyl, $R^{11}$ and $R^{13}$ are hydrogen, and $R^{12}$ is fluorinated lower alkyl having at least 3 fluorine atoms.

**6.** A polymer according to claim 2, wherein component d) is selected from compounds of formula IVa wherein Ac is the acyl radical of a vinylically unsaturated carboxylic acid having 3 or 4 carbon atoms and $R^{14}$ is lower alkyl-substituted cycloalkyl, unsubstituted or lower alkyl-substituted di- or tri-cycloalkyl, unsubstituted or lower alkyl-substituted bicycloalkyl-lower alkyl or tricycloalkyl-lower alkyl, or tert-butyl-substituted $C_1$-$C_4$alkyl, or from compounds of formula IVb wherein $R^{15}$ is $C_2$-$C_3$alkenyl and $R^{16}$ is hydrogen or lower alkyl-substituted cycloalkyl, unsubstituted or lower alkyl-substituted di- or tri-cycloalkyl, unsubstituted or lower alkyl-substituted bicycloalkyl-lower alkyl or tricycloalkyl-lower alkyl, or tert-butyl-substituted $C_1$-$C_4$alkyl, but at least one radical $R^{16}$ is other than hydrogen.

**7.** A polymer according to claim 1, wherein component e) is selected from hydroxy-substituted $C_2$-$C_4$alkyl(meth)acrylates, five- to seven-membered N-vinyllactams, N,N-di-$C_1$-$C_4$alkyl(meth)acrylamides and vinylically unsaturated carboxylic acids having a total of from 3 to 5 carbon atoms.

**8.** A polymer according to claim 1, wherein component f) is selected from macromers of formula Va

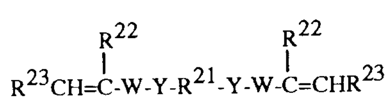

(Va),

wherein $R^{21}$ is a polysiloxane chain having a molecular weight of about 400 to about 8000 and has the formula

$$-R^{26}-\left[SiO(CH_3)_2\right]_k-Si(CH_3)_2-R^{26}- \quad ,$$

$R^{22}$ is hydrogen or methyl,
$R^{23}$ is hydrogen or $-COOR^{24}$,
$R^{24}$ is hydrogen or alkyl having from 1 to 10 carbon atoms, with the proviso that at least one of the radicals $R^{22}$ and $R^{23}$ is hydrogen,
W is -O-, -COO- or $-CONR^{25}-$,
$R^{25}$ is hydrogen or alkyl having from 1 to 5 carbon atoms,
$R^{26}$ is branched or linear alkylene having from 1 to 7 carbon atoms or is $(CH_2CH_2O)_qCH_2CH_2$ wherein q is a number from 1 to 20,
k is an integer from 3 to 120,
Y is a direct bond or the divalent radical $-R^{27}-X^3-CONH-R^{28}-NHCO-X^4-$,
$R^{27}$ is linear or branched alkylene having from 2 to 5 carbon atoms that is bonded to W and is unsubstituted or substituted by di-lower alkylamino or by hydroxy,
$R^{28}$ is a divalent radical that is obtained by removal of the NCO groups from an aliphatic, cycloaliphatic or aromatic diisocyanate,
$X^3$ is -O- or $-NR^{25}-$,
$X^4$ has the same meaning as $X^3$ or is -S- and is bonded to $R^{26}$, with the proviso that when W is -O-, Y is other than a direct bond, and $R^{22}$ and $R^{23}$ are hydrogen, and from macromers of formula Vb

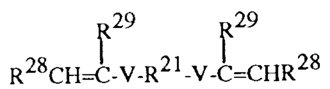

(Vb)

wherein $R^{28}$ and $R^{29}$ are each independently of the other hydrogen or methyl, V is the divalent radical $-R^{30}-R^{31}-NHCO-X^4-$ which is bonded to $R^{21}$ via $X^4$ and wherein $R^{30}$ is phenylene or lower alkyl-substituted phenylene, $R^{31}$ is a bond or lower alkylene, and wherein $R^{21}$ and $X^4$ are as defined above.

**9.** A polymer according to claim 1, wherein the monomer mixture comprises components a) to f) in the following amounts:
a) 40-45 % by weight
b) 5-10 % by weight
c) 29-40 % by weight
d) 3-15 % by weight
e) if present, 5-10 % by weight
f) if present, 5-10 % by weight.

**10.** A polymer according to claim 1, wherein the monomer mixture comprises components a) to f) in the following amounts:
a) 35-40 % by weight
b) 5-10 % by weight
c) 29-35 % by weight
d) 3-10 % by weight
e) 8-10 % by weight
f) 8-10 % by weight.

**11.** A polymer according to claim 9 or 10, wherein components a) to f) are selected from compounds of formula I wherein Ac is acryloyl or methacryloyl, $R^1$ is $C_2$-$C_4$alkylene, n is 0, $Z^2$ has the same meaning as $Z^1$ and $Z^1$ is $OSi(R^4)_3$ wherein $R^4$ is $C_1$-$C_4$alkyl or $OSi(C_1$-$C_4$alkyl$)_3$,
compounds of formula II wherein $Q^2$ is $Q^1$, wherein n is 0, and wherein Ac is acryloyl or methacryloyl, $R^1$ is $C_1$-$C_4$alkylene and $Z^2$ is $C_1$-$C_4$alkyl or $OSi(R^4)_3$ wherein $R^4$ is $C_1$-$C_4$alkyl,
compounds of formula IIIa wherein Ac is acryloyl or methacryloyl, $R^5$ is $C_1$-$C_2$alkylene and $R^6$ is

fluorinated $C_1$-$C_4$alkyl having at least 3 fluorine atoms, or $R^5$-$R^6$ together are hexafluoroisopropyl, compounds of formula IIIb wherein Ac is acryloyl or methacryloyl, $R^5$ is $C_1$-$C_2$alkylene and $R^7$ is fluorinated $C_1$-$C_4$alkylene, compounds of formula IIIc wherein Ac is acryloyl or methacryloyl and $R^8$ is phenylene, compounds of formula IIId wherein Ac is acryloyl or methacryloyl, p is 1 and $R^9$ is perfluorinated $C_5$-$C_7$alkyl, and compounds of formula IIIe wherein $R^{10}$ is vinyl or 1-methylvinyl, $R^{11}$ and $R^{13}$ are hydrogen and $R^{12}$ is fluorinated $C_1$-$C_4$alkyl having at least 3 fluorine atoms,
compounds of formula IVa wherein Ac is acryloyl or methacryloyl and $R^{14}$ is $C_1$-$C_4$alkyl-substituted cyclohexyl, unsubstituted or $C_1$-$C_4$alkyl-substituted $C_7$-$C_{12}$bi- or $C_7$-$C_{12}$tri-cycloalkyl, unsubstituted or $C_1$-$C_4$alkyl-substituted $C_7$-$C_{12}$bi- or $C_7$-$C_{12}$tri-cycloalkyl-$C_1$-$C_4$alkyl, or tert-butyl-substituted $C_1$-$C_4$alkyl, hydroxy-substituted $C_2$-$C_4$alkyl(meth)acrylates, five- to seven-membered N-vinyllactams, N,N-di-$C_1$-$C_4$alkyl(meth)acrylamides and vinylically unsaturated carboxylic acids having a total of from 3 to 5 carbon atoms and
compounds of formula Va derived from a polysiloxanediol having a molecular weight of from about 400 to about 8000 that has first been terminated by isophorone diisocyanate or tolylene-2,4-diisocyanate and has then been reacted with a hydroxy compound selected from the hydroxyalkyl esters, in which alkyl has from 2 to 4 carbon atoms, of acrylic acid, methacrylic acid, maleic acid and fumaric acid, and the hydroxyalkyl vinyl ethers in which alkyl has from 2 to 4 carbon atoms.

**12.** A process for the preparation of a polymer according to claim 1, which comprises copolymerising the monomers in a manner known per se.

**13.** A contact lens consisting substantially of a polymer according to claim 1.

**14.** A process for the manufacture of a contact lens according to claim 13 from a polymer according to claim 1 in a manner known per se.

**15.** The use of a polymer according to claim 1 for the manufacture of a contact lens.

**Claims for the following Contracting State : ES**

**1.** A process for the preparation of a polymer that is a copolymerisation product of a monomer mixture comprising the following monomers:
a) 20-60 % by weight siloxane monovinyl component
b) 1-25 % by weight siloxane oligovinyl component
c) 10-55 % by weight fluorine-containing vinyl component
d) 3-30 % by weight hydrophobic vinyl component having a bulky hydrocarbon radical
e) 0-10 % by weight hydrophilic vinyl component
f) 0-15 % by weight additional cross-linking vinyl component,
the hydrophobic vinyl component having a bulky hydrocarbon radical being a compound of formula IVa

$$Ac\text{-}O\text{-}R^{14}$$

wherein Ac is the acyl radical of a vinylically unsaturated carboxylic acid having from 3 to 5 carbon atoms and $R^{14}$ is lower alkyl-substituted cycloalkyl, lower alkyl-substituted cycloalkyl-lower alkyl, unsubstituted or lower alkyl-substituted di- or oligo-cycloalkyl, unsubstituted or lower alkyl-substituted di- or oligo-cycloalkyl-lower alkyl, or $C_5$-$C_{10}$alkyl that contains at least one tert-butyl group and is unsubstituted or substituted by cycloalkyl,
or a compound of formula IVb

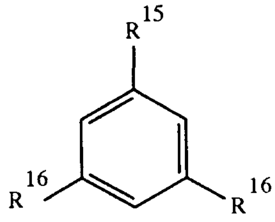

wherein $R^{15}$ is $C_2$-$C_6$alkenyl having the double bond in conjugation to the phenyl ring and $R^{16}$ is hydrogen or has the same meaning as $R^{14}$, but at least one radical $R^{16}$ is other than hydrogen, wherein the monomers are copolymerised in a manner known per se.

**2.** A process according to claim 1, wherein the monomer mixture comprises the following monomers:
a) a siloxane monovinyl component of formula I

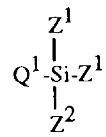

wherein $Q^1$ is a radical of the partial formula

$Ac\text{-}O\text{-}R^1\{A\text{-}R^2\text{-}A'\text{-}R^3\}_n$ ,

Ac is the acyl radical of a vinylically unsaturated carboxylic acid having from 3 to 5 carbon atoms, $R^1$ and $R^2$ are each independently of the other lower alkylene, cycloalkylene, arylene or a combination of lower alkylene with cycloalkylene or lower alkylene with arylene, $R^3$ is lower alkylene or cycloalkylene, A and A' are each independently of the other $X^1$-CO-$X^2$, $X^2$ in each case being bonded to $R^2$, and $X^2$ is -NH- or a bond and $X^1$ is -O-, or -NR- wherein R is lower alkyl, wherein the radicals $Z^1$ are each independently of the other $OSi(R^4)_3$ wherein the radicals $R^4$ are each independently of the others lower alkyl, phenyl or OSi(lower alkyl)$_3$, $Z^2$ is lower alkyl, phenyl or $Z^1$, and n is 0 or 1,
b) a siloxane oligovinyl component of formula II

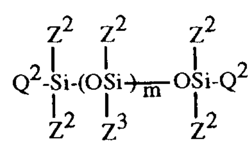

wherein $Q^2$ has the same meaning as $Q^1$ or is Ac-O, wherein $Q^1$, Ac and $Z^2$ are as defined above, $Z^3$ is $Z^2$ or has the same meaning as $Q^2$ and m is 0 to 4,
c) a fluorine-containing vinyl component of formula IIIa

$Ac\text{-}O\text{-}R^5\text{-}R^6$

wherein Ac is as defined above, $R^5$ is $C_1$-$C_4$alkylene or cycloalkylene, $R^6$ is fluorinated lower alkyl having at least 3 fluorine atoms or wherein $R^5$-$R^6$ together are hexafluoroisopropyl or nonafluoro-tert-butyl,
or of formula IIIb

$Ac\text{-}O\text{-}R^5\text{-}R^7\text{-}R^5\text{-}O\text{-}Ac$

wherein Ac and $R^5$ are as defined above and $R^7$ is fluorinated $C_1$-$C_{10}$alkylene,
or of formula IIIc

$Ac\text{-}O\text{-}R^8\text{-}C(CF_3)_2\text{-}R^8\text{-}O\text{-}Ac$

wherein Ac is as defined above and $R^8$ is phenylene that is unsubstituted or substituted by lower alkyl, fluorine or by fluorinated lower alkyl having at least 3 fluorine atoms,
or of formula IIId

$R^9\text{-}(CH_2)_p\text{-}CH(OAc)\text{-}CH_2\text{-}OAc$

wherein Ac is as defined above, $R^9$ is perfluorinated $C_1$-$C_{10}$alkyl and p is 0, 1 or 2,

or of formula IIIe

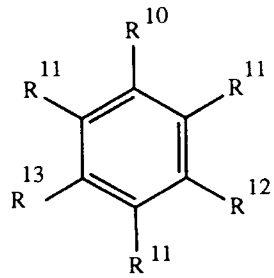

wherein $R^{10}$ is $C_2$-$C_6$alkenyl having the double bond in conjugation to the phenyl ring, the radicals $R^{11}$ are each independently of the others hydrogen or fluorine, $R^{12}$ is fluorinated lower alkyl having at least 3 fluorine atoms and $R^{13}$ is hydrogen or fluorine or has the same meaning as $R^{12}$, and
d) a hydrophobic vinyl component having a bulky hydrocarbon radical as defined in claim 1.

**3.** A process according to claim 2, wherein component a) is selected from compounds of formula I wherein Ac is the acyl radical of a vinylically unsaturated carboxylic acid having three or four carbon atoms, $R^1$ is lower alkylene, n is 0, $Z^2$ has the same meaning as $Z^1$ and the radicals $Z^1$ are each independently of the other $OSi(R^4)_3$ wherein the radicals $R^4$ are each independently of the others lower alkyl or OSi(lower alkyl)$_3$.

**4.** A process according to claim 2, wherein component b) is selected from compounds of formula II wherein $Q^2$ is $Q^1$, wherein n is 0, and wherein Ac is the acyl radical of a vinylically unsaturated carboxylic acid having 3 or 4 carbon atoms, $R^1$ is lower alkylene, m is 0 and the radicals $Z^2$ are each independently of the others lower alkyl or $OSi(R^4)_3$ wherein $R^4$ is lower alkyl.

**5.** A process according to claim 2, wherein component c) is selected from compounds of formula IIIa, b, c, d or e wherein Ac is the acyl radical of a vinylically unsaturated carboxylic acid having 3 or 4 carbon atoms, $R^5$ is $C_1$-$C_3$alkylene and $R^6$ is fluorinated lower alkyl having at least 3 fluorine atoms, or $R^5$-$R^6$ together are hexafluoroisopropyl or nonafluoro-tert-butyl, $R^7$ is fluorinated lower alkylene, $R^8$ is phenylene, p is 1, $R^9$ is perfluorinated $C_4$-$C_8$alkyl, $R^{10}$ is $C_2$-$C_3$alkenyl, $R^{11}$ and $R^{13}$ are hydrogen, and $R^{12}$ is fluorinated lower alkyl having at least 3 fluorine atoms.

**6.** A process according to claim 2, wherein component d) is selected from compounds of formula IVa wherein Ac is the acyl radical of a vinylically unsaturated carboxylic acid having 3 or 4 carbon atoms and $R^{14}$ is lower alkyl-substituted cycloalkyl, unsubstituted or lower alkyl-substituted di- or tri-cycloalkyl, unsubstituted or lower alkyl-substituted bicycloalkyl-lower alkyl or tricycloalkyl-lower alkyl, or tert-butyl-substituted $C_1$-$C_4$alkyl, or from compounds of formula IVb wherein $R^{15}$ is $C_2$-$C_3$alkenyl and $R^{16}$ is hydrogen or lower alkyl-substituted cycloalkyl, unsubstituted or lower alkyl-substituted di- or tri-cycloalkyl, unsubstituted or lower alkyl-substituted bicycloalkyl-lower alkyl or tri-cycloalkyl-lower alkyl, or tert-butyl-substituted $C_1$-$C_4$alkyl, but at least one radical $R^{16}$ is other than hydrogen.

**7.** A process according to claim 1, wherein component e) is selected from hydroxy-substituted $C_2$-$C_4$alkyl-(meth)acrylates, five- to seven-membered N-vinyllactams, N,N-di-$C_1$-$C_4$alkyl(meth)acrylamides and vinylically unsaturated carboxylic acids having a total of from 3 to 5 carbon atoms.

**8.** A process according to claim 1, wherein component f) is selected from macromers of formula Va

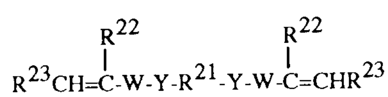

(Va),

wherein $R^{21}$ is a polysiloxane chain having a molecular weight of about 400 to about 8000 and has the formula

$$-R^{26}-\left[SiO(CH_3)_2\right]_k-Si(CH_3)_2-R^{26}- \quad ,$$

$R^{22}$ is hydrogen or methyl,
$R^{23}$ is hydrogen or $-COOR^{24}$,
$R^{24}$ is hydrogen or alkyl having from 1 to 10 carbon atoms, with the proviso that at least one of the radicals $R^{22}$ and $R^{23}$ is hydrogen,
W is -O-, -COO- or $-CONR^{25}-$,
$R^{25}$ is hydrogen or alkyl having from 1 to 5 carbon atoms,
$R^{26}$ is branched or linear alkylene having from 1 to 7 carbon atoms or is $(CH_2CH_2O)_qCH_2CH_2$ wherein q is a number from 1 to 20,
k is an integer from 3 to 120,
Y is a direct bond or the divalent radical $-R^{27}-X^3-CONH-R^{28}-NHCO-X^4-$,
$R^{27}$ is linear or branched alkylene having from 2 to 5 carbon atoms that is bonded to W and is unsubstituted or substituted by di-lower alkylamino or by hydroxy,
$R^{28}$ is a divalent radical that is obtained by removal of the NCO groups from an aliphatic, cycloaliphatic or aromatic diisocyanate,
$X^3$ is -O- or $-NR^{25}-$,
$X^4$ has the same meaning as $X^3$ or is -S- and is bonded to $R^{26}$, with the proviso that when W is -O-, Y is other than a direct bond, and $R^{22}$ and $R^{23}$ are hydrogen, and from macromers of formula Vb

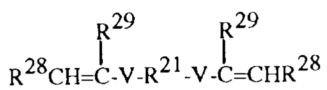

(Vb)

wherein $R^{28}$ and $R^{29}$ are each independently of the other hydrogen or methyl, V is the divalent radical $-R^{30}-R^{31}-NHCO-X^4-$ which is bonded to $R^{21}$ via $X^4$ and wherein $R^{30}$ is phenylene or lower alkyl-substituted phenylene, $R^{31}$ is a bond or lower alkylene, and wherein $R^{21}$ and $X^4$ are as defined above.

**9.** A process according to claim 1, wherein the monomer mixture comprises components a) to f) in the following amounts:
a) 40-45 % by weight
b) 5-10 % by weight
c) 29-40 % by weight
d) 3-15 % by weight
e) if present, 5-10 % by weight
f) if present, 5-10 % by weight.

**10.** A process according to claim 1, wherein the monomer mixture comprises components a) to f) in the following amounts:
a) 35-40 % by weight
b) 5-10 % by weight
c) 29-35 % by weight
d) 3-10 % by weight
e) 8-10 % by weight
f) 8-10 % by weight.

**11.** A process according to claim 9 or 10, wherein components a) to f) are selected from compounds of formula I wherein Ac is acryloyl or methacryloyl, $R^1$ is $C_2$-$C_4$alkylene, n is 0, $Z^2$ has the same meaning as $Z^1$ and $Z^1$ is $OSi(R^4)_3$ wherein $R^4$ is $C_1$-$C_4$alkyl or $OSi(C_1\text{-}C_4alkyl)_3$,
compounds of formula II wherein $Q^2$ is $Q^1$, wherein n is 0, and wherein Ac is acryloyl or methacryloyl, $R^1$ is $C_1$-$C_4$alkylene and $Z^2$ is $C_1$-$C_4$alkyl or $OSi(R^4)_3$ wherein $R^4$ is $C_1$-$C_4$alkyl,
compounds of formula IIIa wherein Ac is acryloyl or methacryloyl, $R^5$ is $C_1$-$C_2$alkylene and $R^6$ is fluorinated $C_1$-$C_4$alkyl having at least 3 fluorine atoms, or $R^5$-$R^6$ together are hexafluoroisopropyl,

compounds of formula IIIb wherein Ac is acryloyl or methacryloyl, $R^5$ is $C_1$-$C_2$alkylene and $R^7$ is fluorinated $C_1$-$C_4$alkylene, compounds of formula IIIc wherein Ac is acryloyl or methacryloyl and $R^8$ is phenylene, compounds of formula IIId wherein Ac is acryloyl or methacryloyl, p is 1 and $R^9$ is perfluorinated $C_5$-$C_7$alkyl, and compounds of formula IIIe wherein $R^{10}$ is vinyl or 1-methylvinyl, $R^{11}$ and $R^{13}$ are hydrogen and $R^{12}$ is fluorinated $C_1$-$C_4$alkyl having at least 3 fluorine atoms,
compounds of formula IVa wherein Ac is acryloyl or methacryloyl and $R^{14}$ is $C_1$-$C_4$alkyl-substituted cyclohexyl, unsubstituted or $C_1$-$C_4$alkyl-substituted $C_7$-$C_{12}$bi- or $C_7$-$C_{12}$tri-cycloalkyl, unsubstituted or $C_1$-$C_4$alkyl-substituted $C_7$-$C_{12}$bi- or $C_7$-$C_{12}$tri-cycloalkyl-$C_1$-$C_4$alkyl, or tert-butyl-substituted $C_1$-$C_4$alkyl, hydroxy-substituted $C_2$-$C_4$alkyl(meth)acrylates, five- to seven-membered N-vinyllactams, N,N-di-$C_1$-$C_4$alkyl(meth)acrylamides and vinylically unsaturated carboxylic acids having a total of from 3 to 5 carbon atoms and
compounds of formula Va derived from a polysiloxanediol having a molecular weight of from about 400 to about 8000 that has first been terminated by isophorone diisocyanate or tolylene-2,4-diisocyanate and has then been reacted with a hydroxy compound selected from the hydroxyalkyl esters, in which alkyl has from 2 to 4 carbon atoms, of acrylic acid, methacrylic acid, maleic acid and fumaric acid, and the hydroxyalkyl vinyl ethers in which alkyl has from 2 to 4 carbon atoms.

**12.** A contact lens consisting substantially of a polymer according to claim 1.

**13.** A process for the manufacture of a contact lens according to claim 12 from a polymer according to claim 1 in a manner known per se.

**14.** The use of a polymer according to claim 1 for the manufacture of a contact lens.

## Revendications

**Revendications pour les Etats contractants suivants : AT, BE, CH, LI, DE, DK, FR, GB, GR, IT, LU, NL, SE**

**1.** Polymères constitués par les produits de copolymérisation de mélanges de monomères contenant les monomères suivants :
a) 20 à 60 % en poids du composant monovinyle siloxane,
b) 1 à 25 % en poids du composant oligovinyle siloxane,
c) 10 à 55 % en poids du composant vinylique fluoré,
d) 3 à 30 % en poids du composant vinylique hydrophobe comportant un reste hydrocarboné encombrant,
e) 0 à 10 % en poids du composant vinylique hydrophile,
f) 0 à 15 % en poids du composant vinylique réticulant supplémentaire,
le composant vinylique hydrophobe comportant un reste hyclrocarboné encombrant étant un composé de formule IVa

$$Ac\text{-}O\text{-}R^{24}$$

où Ac est le reste acyle d'un acide carboxylique à insaturation vinylique comportant 3 à 5 atomes de carbone et $R^{14}$ est un cycloalkyle substitué par un alkyle inférieur, un cycloalkylalkyle inférieur substitué par un alkyle inférieur, un di- ou oligo-cycloalkyle non substitué ou substitué par un alkyle inférieur, un di- ou oligo-cycloalkylalkyle inférieur non substitué ou substitué par un alkyle inférieur ou un alkyle en $C_5$-$C_{10}$ contenant au moins un groupe tert-butyle non substitué ou substitué par un cycloalkyle,
ou un composé de formule IVb,

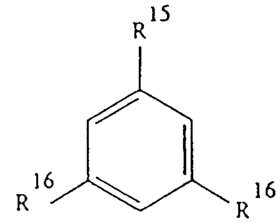

où $R^{15}$ représente un alcényle en $C_2$-$C_6$ comportant une double liaison conjuguée avec le noyau phényle et $R^{16}$ représente l'hydrogène ou a la signification de $R^{14}$, un $R^{16}$ au moins étant toutefois différent de l'hydrogène.

**2.** Polymère selon la revendication 1, caractérisé en ce que le mélange de monomères contient les monomères suivants :

a) un composant monovinyle siloxane de formule I

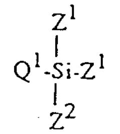

où $Q^1$ représente le reste de formule partielle

$Ac\text{-}O\text{-}R^1\{A\text{-}R^2\text{-}A'\text{-}R^3\}_n$

Ac étant le reste acyle d'un acide carboxylique à insaturation vinylique comportant 3 à 5 atomes de carbone, $R^1$ et $R^2$ représentant, indépendamment l'un de l'autre, un alkylène inférieur, un cycloalkylène, un arylène ou une combinaison d'un alkylène inférieur et d'un cycloalkylène ou d'un alkylène inférieur et d'un arylène, $R^3$ représentant un alkylène inférieur ou un cycloalkylène, A et A' représentant, indépendamment l'un de l'autres $X^1$-CO-$X^2$, $X^2$ étant lié à $R^2$ et $X^2$ représentant -NH- ou une liaison et $X^1$ représentant -O- ou -NR-, R étant un alkyle inférieur, les restes Z représentent, indépendamment l'un de l'autre, $OSi(R^4)_3$, les $R^4$ représentant, indépendamment les uns des autres, un alkyle inférieur, un phényle ou OSi(alkyle inférieur)$_3$, $Z^2$ représente un alkyle inférieur, un phényle ou $Z^1$ et n est égal à 0 ou 1,

b) un composant oligovinyle siloxane de formule II

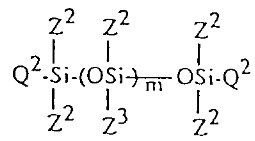

où $Q^2$ a la signification de $Q^1$ su représente Ac-O, où $Q^1$, Ac et $Z^2$ sont définis comme précédemment, $Z^3$ représente $Z^2$ ou a la signification de $Q^2$ et m est compris entre 0 et 4,

c) un composant vinylique fluoré de formule IIIa

$Ac\text{-}O\text{-}R^5\text{-}R^6$

où Ac est défini comme précédemment, $R^5$ représente un alkylène en $C_1$-$C_4$ ou un cycloalkylène, $R^6$ représente un alkyle inférieur fluoré comportant au moins 3 atomes de fluor ou où $R^5$ et $R^6$ représentent ensemble l'hexafluoroisopropyle ou le nonafluoro-tert-butyle,
ou de formule IIIb

$Ac\text{-}O\text{-}R^5\text{-}R^7\text{-}R^5\text{-}O\text{-}Ac$

où Ac et $R^5$ sont définis comme précédemment et $R^7$ représente un alkylène en $C_1$-$C_{10}$ fluoré
ou de formule IIIc

$Ac\text{-}O\text{-}R^8\text{-}C(CF_3)_2\text{-}R^8\text{-}O\text{-}Ac$

où Ac est défini comme précédemment et $R^8$ représente un phénylène non substitué ou substitué par un alkyle inférieur, le fluor ou un alkyle inférieur fluoré comportant au moins 3 atomes de fluor,.
ou de formule IIId

$R^9\text{-}(CH_2)_p\text{-}CH(OAc)\text{-}CH_2\text{-}OAc$

où Ac est défini comme précédemment, $R^9$ représente un alkyle en $C_1$-$C_{10}$ perfluoré et p est égal à 0, 1 ou 2
ou de formule IIIe

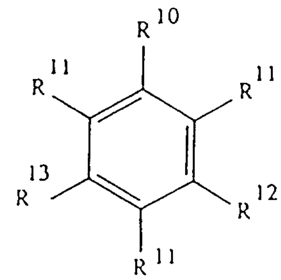

où R1 représente un alcényle en $C_2$-$C_6$ comportant une double liaison conjuguée avec le noyau phényle, les restes $R^{11}$ représentent, indépendamment les uns des autres, l'hydrogène ou le fluor, $R^{12}$ représente un alkyle inférieur fluoré comportant au moins 3 atomes de fluor et $R^{13}$ est l'hydrogène ou le fluor ou a la signification de $R^{12}$ et
d) un composant vinylique hydrophobe comportant un reste hydrocarboné encombrant tel que défini dans la revendication 1.

**3.** Polymère selon la revendication 2, caractérisé en ce que le composant a) est choisi parmi les composés de formule I où Ac est le reste acyle d'un acide carboxylique à insaturation vinylique comportant 3 ou 4 atomes de carbone, $R^1$ représente un alkylène inférieur, n est égal à 0, $Z^2$ a la signification de $Z^1$ et les $Z^1$ représentent, indépendamment l'un de l'autre, $OSi(R^4)_3$, les $R^4$ étant, indépendamment les uns des autres, un alkyle inférieur ou OSi(alkyle inférieur)$_3$.

**4.** Polymère selon la revendication 2, caractérisé en ce que le composant b) est choisi parmi les composés de formule II où $Q^2$ représente $Q^1$, n est égal à 0, où Ac est, en outre, le reste acyle d'un acide carboxylique à insaturation vinylique comportant 3 ou 4 atomes de carbone, $R^1$ représente un alkylène inférieur, m est égal à 0 et les $Z^2$ représentent, indépendamment les uns des autres, un alkyle inférieur ou $OSi(R^4)_3$, $R^4$ étant un alkyle inférieur.

**5.** Polymère selon la revendication 2, caractérisé en ce que le composant c) est choisi parmi les composés de formules IIIa, IIIb, IIIc, IIId ou IIIe où Ac est le reste acyle d'un acide carboxylique à insaturation vinylique comportant 3 ou 4 atomes de carbone, $R^5$ représente un alkylène en $C_1$-$C_3$ et $R^6$ un alkyle inférieur fluoré comportant au moins 3 atomes de fluor ou $R^5$ et $R^6$ représentent ensemble l'hexafluoroisopropyle ou le nonafluoro-tert-butyle, $R^7$ représente un alkylène inférieur fluoré, $R^8$ un phénylène, p est égal à 1, $R^9$ représente un alkyle en $C_4$-$C_8$ perfluoré, $R^{10}$ représente un alcényle en $C_2$-$C_3$, $R^{11}$ et $R^{13}$ représentent l'hydrogène et $R^{12}$ un alkyle inférieur fluoré comportant au moins 3 atomes de fluor.

**6.** Polymère selon la revendication 2, caractérisé en ce que le composant d) est choisi parmi les composés de formule IVa où Ac est le reste acyle d'un acide carboxylique à insaturation vinylique comportant 3 ou 4 atomes de carbone et $R^1$ est un cycloalkyle substitué par un alkyle inférieur, un diou tricycloalkyle non substitué ou substitué par un alkyle inférieur, un bicycloalkylalkyle inférieur ou un tricycloalkylalkyle inférieur non susbtitué ou substitué par un alkyle inférieur ou un alkyle en $C_1$-$C_4$ substitué par le tert-butyle ou parmi les composés de formule IVb où $R^{15}$ représente un alcényle en $C_2$-$C_3$, et $R^{16}$ représente l'hydrogène ou un cyclo-alkyle substitué par un alkyle inférieur, un di- ou tricycloalkyle non substitué ou substitué par un alkyle inférieur, un bicycloalkylalkyle inférieur ou un tricyclo-alkylalkyle inférieur non substitué ou substitué par un alkyle inférieur ou un alkyle en $C_1$-$C_4$ substitué par le tert-butyle, un $R^1$ au moins étant toutefois différent de l'hydrogène.

**7.** Polymère selon la revendication 1, caractérisé en ce que le composant e) est choisi parmi les (méth)-acrylates d'alkyle en $C_2$-$C_4$ substitués par un hydroxy, des N-vinyllactames ayant cinq à sept chaînons, des (méth)acrylamides N,N-dialkyle en $C_1$-$C_4$ et des acides carboxyliques à insaturation vinylique comportant au total 3 à 5 atomes de carbone.

8. Polymère selon la revendication 1, caractérisé en ce que le composant f) est choisi parmi les macromères de formule Va

$$R^{23}CH{=}\underset{}{\overset{R^{22}}{\overset{|}{C}}}\text{-}W\text{-}Y\text{-}R^{21}\text{-}Y\text{-}W\text{-}\overset{R^{22}}{\overset{|}{C}}{=}CHR^{23} \qquad (Va)$$

où $R^{21}$ représente une chaîne polysiloxane ayant un poids moléculaire compris entre environ 400 et environ 8.000 et présente la formule

$$-R^{26}\left[-SiO(CH_3)_2-\right]_k Si(CH_3)_2\text{-}R^{26}\text{-}$$

où
$R^{22}$ représente l'hydrogène ou le méthyle,
$R^{23}$ l'hydrogène ou $-COOR^{24}$,
$R^{24}$ l'hydrogène ou un alkyle comportant 1 à 10 atomes de carbone, sous réserve qu'au moins l'un des restes $R^{22}$ et $R^{23}$ soit l'hydrogène,
W représente -O-, -COO- ou $-CONR^{25}-$,
$R^{25}$ l'hydrogrène ou un alkyle comportant 1 à 5 atomes de carbone,
$R^{26}$ un alkylène ramifié ou linéaire comportant 1 à 7 atomes de carbone ou $(CH_2CH_2O)_qCH_2CH_2$, q étant un nombre compris entre 1 et 20,
k un nombre entier allant de 3 à 120,
Y représente une liaison directe ou le reste bivalent $-R^{27}-X^3-CONH-R^{28}-NHCO-X^4-$,
$R^{27}$ un alkylène contenant 2 à 5 atomes de carbone linéaire ou ramifié, non substitué ou substitué par un dialkyle inférieur amino ou par un hydroxy, lié à W,
$R^{28}$ un reste bivalent obtenu par élimination des groupes NCO d'un diisocyanate aliphatique, cycloaliphatique ou aromatique,
$X^3$ -O- ou $-NR^{25}-$,
$X^4$ a la signification de $X^3$ ou représente -S- et est lié à $R^{26}$, sous réserve que lorsque W représente -O-, Y est différent d'une liaison directe et $R^{22}$ et $R^{23}$ représentent l'hydrogène,
et parmi les macromères de formule Vb

$$R^{28}CH{=}\overset{R^{29}}{\overset{|}{C}}\text{-}V\text{-}R^{21}\text{-}V\text{-}\overset{R^{29}}{\overset{|}{C}}{=}CHR^{28} \qquad (Vb)$$

où $R^{28}$ et $R^{29}$ représentent, indépendamment l'un de l'autre, l'hydrogène ou le méthyle, V représente le reste bivalent $-R^{30}-R^{31}-NHCO-X^4-$ lié à $R^{21}$ par $X^4$ et où $R^{30}$ représente un phénylène ou un phénylène substitué par un alkyle inférieur, $R^{31}$ représente une liaison ou un alkylène inférieur et où $R^{21}$ et $X^4$ ont les significations indiquées précédemment.

9. Polymère selon la revendication 1, caractérisé en ce que le mélange des monomères contient les composants a) à f) dans les proportions suivantes:
   a) 40 à 45 % en poids,
   b) 5 à 10 % en poids,
   c) 29 à 40 % en poids,
   d) 3 à 15 % en poids,
   e) 5 à 10 % en poids si présent,
   f) 5 à 10% en poids si présent.

10. Polymère selon la revendication 1, caractérisé en ce que le mélange des monomères contient les composants a) à f) dans les proportions suivantes
   a) 35 à 40 % en poids

b) 5 à 10 % en poids,
c) 29 à 35 % en poids,
d) 3 à 10 % en poids,
e) 8 à 10 % en poids,
f) 8 à 10 % en poids.

**11.** Polymère selon la revendication 9 ou 10, caractérisé en ce que les composants a) à f) sont choisis parmi

- les composés de formule I où Ac représente l'acryloyle ou le méthacryloyle, $R^1$ représente un alkylène en $C_2$-$C_4$, n est égal à 0, $Z^2$ a la signification de $Z^1$ et $Z^1$ représente $OSi(R^4)_3$, $R^4$ étant un alkyle en $C_1$-$C_4$ ou OSi(alkyle en $C_1$-$C_4$)$_3$,
- les composés de formule II où $Q^2$ représente $Q^1$, n est égal à 0, Ac représente, en outre, l'acryloyle ou le méthacryloyle, $R^1$ représente un alkylène en $C_1$-$C_4$ et $Z^2$ un alkyle en $C_1$-$C_4$ ou $OSi(R^4)_3$, $R^4$ représentant un alkyle en $C_1$-$C_4$, les composés de formule IIIa où Ac représente l'acryloyle ou le méthacryloyle, $R^5$ représente un alkylène en $C_1$-$C_2$ et $R^6$ un alkyle en $C_1$-$C_4$ fluoré comportant au moins 3 atomes de fluor ou $R^5$ et $R^6$ représentent ensemble l'hexafluoroisopropyle,
- les composés de formule IIIb où Ac représente l'acryloyle ou le méthacryloyle, $R^5$ un alkylène en $C_1$-$C_2$ et $R^7$ un alkylène en $C_1$-$C_4$ fluoré,
- les composés de formule IIIc où Ac représente l'acryloyle ou le méthacryloyle et $R^8$ le phénylène,
- les composés de formule IIId où Ac représente l'acryloyle ou le méthacryloyle, p est égal à 1 et $R^9$ représente un alkyle en $C_5$-$C_7$ perfluoré et
- les composés de formule IIIe où $R^1$ représente le vinyle ou le 1-méthylvinyle, $R^{11}$ et $R^{13}$ représentent l'hydrogène et $R^{12}$ un alkyle en $C_1$-$C_4$ fluoré comportant au moins 3 atomes de fluor,
- les composés de formule IVa où Ac représente l'acryloyle ou le méthacryloyle et $R^{14}$ est le cyclohexyle substitué par un alkyle en $C_1$-$C_4$, un bi- ou tricycloalkyle en $C_7$-$C_{12}$ non substitué ou susbtitué par un alkyle en $C_1$-$C_4$, un bi- ou tricycloalkyl en $C_7$-$C_{12}$ alkyle en $C_1$-$C_4$ non substitué ou substitué par un alkyle en $C_1$-$C_4$ ou un alkyle en $C_1$-$C_4$ substitué par le tert-butyle,
  des (méth)acrylates d'alkyle en $C_2$-$C_4$ substitués par l'hydroxy, des N-vinyllactames ayant 5 à 7 chaînons, des (méth)acrylamides N,N-dialkyle en $C_1$-$C_4$ et des acides carboxyliques à insaturation vinylique comportant au total 3 à 5 atomes de carbone et
- les composés de formule Va, dérivés d'un polysiloxanediol ayant un poids moléculaire allant d'environ 400 à environ 8.000, tout d'abord fermé en bout de chaîne avec l'isophoronediisocyanate ou le tolylène-2,4-diisocyanate, puis mis à réagir avec un composé hydroxylé choisi parmi les esters hydroxyalkyliques des acides acrylique, méthacrylique, maléique et fumarique, l'alkyle présentant 2 à 4 atomes de carbone et parmi les hydroxyalkylvinyléthers, l'alkyle présentant 2 à 4 atomes de carbone.

**12.** Procédé pour la préparation d'un polymère selon la revendication 1, caractérisé en ce que les monomères sont copolymérisés d'une façon connue en soi,

**13.** Lentille de contact essentiellement constituée d'un polymère selon la revendication 1.

**14.** Procédé pour la fabrication d'une lentille de contact selon la revendication 13 constituée d'un polymère selon la revendication 1 d'une façon connue en soi.

**15.** Utilisation d'un polymère selon la revendication 1 pour la fabrication d'une lentille de contact.

**Revendications pour l'Etat contractant suivant : ES**

**1.** Procédé pour la préparation de polymères constitués par les produits de copolymérisation de mélanges de monomères contenant les monomères suivants :

a) 20 à 60 % en poids du composant monovinyle siloxane,
b) 1 à 25 % en poids du composant oligovinyle siloxane,
c) 10 à 55 % en poids du composant vinylique fluoré,
d) 3 à 30 % en poids du composant vinylique hydrophobe comportant un reste hydrocarboné encombrant,

e) 0 à 10 % en poids du composant vinylique hydrophile,

f) 0 à 15 % en poids du composant vinylique réticulant supplémentaire,

le composant vinylique hydrophobe comportant un reste hydrocarboné encombrant étant un composé de formule IVa

$Ac\text{-}O\text{-}R^{24}$

où Ac est le reste acyle d'un acide carboxylique à insaturation vinylique comportant 3 à 5 atomes de carbone et $R^{14}$ est un cycloalkyle substitué par un alkyle inférieur, un cycloalkylalkyle inférieur substitué par un alkyle inférieur, un di- ou oligo-cycloalkyle non substitué ou substitué par un alkyle inférieur, un di- ou oligo-cycloalkylalkyle inférieur non substitué ou substitué par un alkyle inférieur ou un alkyle en $C_5$-$C_{10}$ contenant au moins un groupe tert-butyle non substitué ou substitué par un cycloalkyle,

ou un composé de formule IVb,

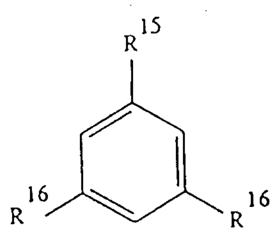

où $R^{15}$ représente un alcényle en $C_2$-$C_6$ comportant une double liaison conjuguée avec le noyau phényle et $R^1$ représente l'hydrogène ou a la signification de $R^{14}$, un $R^{16}$ au moins étant toutefois différent de l'hydrogène,

caractérisé en ce que les monomères sont copolymérisés d'une façon connue en soi.

**2.** Procédé selon la revendication 1, caractérisé en ce que le mélange de monomères contient les monoméres suivants:

a) un composant monovinyle siloxane de formule I

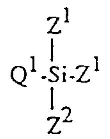

où $Q^1$ représente le reste de formule partielle

$Ac\text{-}O\text{-}R^1\{A\text{-}R^2\text{-}A'\text{-}R^3\}_n$

Ac étant le reste acyle d'un acide carboxylique à insaturation vinylique comportant 3 à 5 atomes de carbone, $R^1$ et $R^2$ représentant, indépendamment l'un de l'autre, un alkylène inférieur, un cycloalkylène, un arylène ou une combinaison d'un alkylène inférieur et d'un cycloalkylène ou d'un alkylène inférieur et d'un arylène, $R^3$ représentant un alkylène inférieur ou un cycloalkylène, A et A' représentant, indépendamment l'un de l'autre $X^1$-CO-$X^2$, $X^2$ étant lié à $R^2$ et $X^2$ représentant -NH- ou une liaison et $X^1$ représentant -O- ou -NR-, R étant un alkyle inférieur, les restes Z représentent, indépendamment l'un de l'autre, $OSi(R^4)_3$, les $R^4$ représentant, indépendamment les uns des autres, un alkyle inférieur, un phényle ou OSi(alkyle inférieur)$_3$, $Z^2$ représente un alkyle inférieur, un phényle ou $Z^1$ et n est égal à 0 ou 1,

b) un composant oligovinyle siloxane de formule II

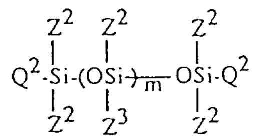

où $Q^2$ a la signification de $Q^1$ ou représente Ac-O, où $Q^1$, Ac et $Z^{12}$ sont définis comme précédemment, $Z^3$ représente $Z^2$ ou a la signification de $Q^2$ et m est compris entre 0 et 4,

c) un composant vinylique fluoré de formule IIIa

$Ac\text{-}O\text{-}R^5\text{-}R^6$

où Ac est défini comme précédemment, $R^5$ représente un alkylène en $C_1$-$C_4$ ou un cycloalkylène, $R^6$ représente un alkyle inférieur fluoré comportant au moins 3 atomes de fluor ou où $R^5$ et $R^6$ représentent ensemble l'hexafluoroisopropyle ou le nonafluorotert-butyle,

ou de formule IIIb

$Ac\text{-}O\text{-}R^5\text{-}R^7\text{-}R^5\text{-}O\text{-}Ac$

où Ac et $R^5$ sont définis comme précédemment et $R^7$ représente un alkylène en $C_1$-$C_{10}$ fluoré

ou de formule IIIc

$Ac\text{-}O\text{-}R^8\text{-}C(CF_3)_2\text{-}R^8\text{-}O\text{-}Ac$

où Ac est défini comme précédemment et $R^8$ représente un phénylène non substitué ou substitué par un alkyle inférieur, le fluor ou un alkyle inférieur fluoré comportant au moins 3 atomes de fluor,.

ou de formule IIId

$R^9\text{-}(CH_2)_p\text{-}CH(OAc)\text{-}CH_2\text{-}OAc$

où Ac est défini comme précédemment, $R^9$ représente un alkyle en $C_1$-$C_{10}$ perfluoré et p est égal à 0, 1 ou 2

ou de formule IIIe

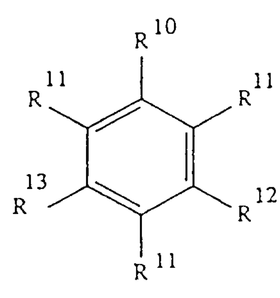

où $R^{10}$ représente un alcényle en $C_2$-$C_6$ comportant une double liaison conjuguée avec le noyau phényle, les restes $R^{11}$ représentent, indépendamment les uns des autres, l'hydrogène ou le fluor, $R^{12}$ représente un alkyl inférieur fluoré comportant au moins 3 atomes de fluor et $R^{13}$ est l'hydrogène ou le fluor ou a la signification de $R^{12}$ et

d) un composant vinylique hydrophobe comportant un reste hydrocarboné encombrant, tel que défini dans la revendication 1.

3. Procédé selon la revendication 2, caractérisé en ce que le composant a) est choisi parmi les composés de formule I où Ac est le reste acyle d'un acide carboxylique à insaturation vinylique comportant 3 ou 4 atomes de carbone, $R^1$ représente un alkylène inférieur, n est égal à 0, $Z^2$ a la signification de $Z^1$ et les

$Z^1$ représentent, indépendamment l'un de l'autre, $OSi(R^4)_3$, les $R^4$ étant, indépendamment les uns des autres, un alkyle inférieur ou OSi(alkyle inférieur)$_3$.

4. Procédé selon la revendication 2, caractérisé en ce que le composant b) est choisi parmi les composés de formule II où $Q^2$ représente $Q^1$, n est égal à 0, où Ac est, en outre, le reste acyle d'un acide carboxylique à insaturation vinylique comportant 3 ou 4 atomes de carbone, $R^1$ représente un alkylène inférieur, m est égal à 0 et les $Z^2$ représentent, indépendamment les uns des autres, un alkyle inférieur ou $OSi(R^4)_3$, $R^4$ étant un alkyle inférieur.

5. Procédé selon la revendication 2, caractérisé en ce que le composant c) est choisi parmi les composés de formules IIIa, IIIb, IIIc, IIId ou IIIe où Ac est le reste acyle d'un acide carboxylique à insaturation vinylique comportant 3 ou 4 atomes de carbone, $R^5$ représente un alkylène en $C_1$-$C_3$ et $R^6$ un alkyle inférieur fluoré comportant au moins 3 atomes de fluor ou $R^5$ et $R^6$ représentent ensemble l'hexafluoroisopropyle ou le nonafluoro-tert-butyle, $R^7$ représente un alkylène inférieur fluoré, $R^8$ un phénylène, p est égal à 1, $R^9$ représente un alkyle en $C_4$-$C_8$ perfluoré, $R^{10}$ représente un alcényle en $C_2$-$C_3$, $R^{11}$ et $R^{13}$ représentent l'hydrogène et $R^{12}$ un alkyle inférieur fluoré comportant au moins 3 atomes de fluor.

6. Procédé selon la revendication 2, caractérisé en ce que le composant d) est choisi parmi les composés de formule IVa où Ac est le reste acyle d'un acide carboxylique à insaturation vinylique comportant 3 ou 4 atomes de carbone et $R^1$ est un cycloalkyle substitué par un alkyle inférieur, un diou tricycloalkyle non substitué ou substitué par un alkyle inférieur, un bicycloalkylalkyle inférieur ou un tricycloalkylalkyle inférieur non susbtitué ou substitué par un alkyle inférieur ou un alkyle en $C_1$-$C_4$ substitué par le tert-butyle ou parmi les composés de formule IVb où $R^{15}$ représente un alcényle en $C_2$-$C_3$, et $R^{16}$ représente l'hydrogène ou un cyclo-alkyle substitué par un alkyle inférieur, un di- ou tri-cycloalkyle non substitué ou substitué par un alkyle inférieur, un bicycloalkylalkyle inférieur ou un tricyclo-alkylalkyle inférieur non substitué ou substitué par un alkyle inférieur ou un alkyle en $C_1$-$C_4$ substitué par le tert-butyle, un $R^1$ au moins étant toutefois différent de l'hydrogène.

7. Procédé selon la revendication 1, caractérisé en ce que le composant e) est choisi parmi les (méth)-acrylates d'alkyle en $C_2$-$C_4$ substitués par un hydroxy, des N-vinyllactames ayant cinq à sept chaînons, des (méth)acrylamides N,N-dialkyle en $C_1$-$C_4$ et des acides carboxyliques à insaturation vinylique comportant au total 3 à 5 atomes de carbone.

8. Procédé selon la revendication 1, caractérisé en ce que le composant f) est choisi parmi les macromères de formule Va

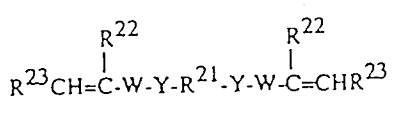

(Va)

où $R^{21}$ représente une chaîne polysiloxane ayant un poids moléculaire compris entre environ 400 et environ 8.000 et présente la formule

$$-R^{26}-\left[SiO(CH_3)_2\right]_k-Si(CH_3)_2-R^{26}-$$

où
$R^{22}$ représente l'hydrogène ou le méthyle,
$R^{23}$ l'hydrogène ou $-COOR^{24}$,
$R^{24}$ l'hydrogène ou un alkyle comportant 1 à 10 atomes de carbone, sous réserve qu'au moins l'un des restes $R^{22}$ et $R^{23}$ soit l'hydrogène,
W représente -O-, -COO- ou $CONR^{25}$-,
$R^{25}$ l'hydrogrène ou un alkyle comportant 1 à 5 atomes de carbone,
$R^{26}$ un alkylène ramifié ou linéaire comportant 1 à 7 atomes de carbone ou $(CH_2CH_2O)_qCH_2CH_2$, q étant un nombre compris entre 1 et 20,

k un nombre entier allant de 3 à 120,
Y représente une liaison directe ou le reste bivalent $-R^{27}-X^3-CONH-R^{28}-NHCO-X^4-$,
$R^{27}$ un alkylène contenant 2 à 5 atomes de carbone linéaire ou ramifié, non substitué ou substitué par un dialkyle inférieur amino ou par un hydroxy, lié à W,
$R^{28}$ un reste bivalent obtenu par élimination des groupes NCO d'un diisocyanate aliphatique, cycloaliphatique ou aromatique,
$X^3$ -O- ou $-NR^{25}-$,
$X^4$ a la signification de $X^3$ ou représente -S- et est lié à $R^{26}$, sous réserve que lorsque W représente -O-, Y est différent d'une liaison directe et $R^{22}$ et $R^{23}$ représentent l'hydrogène,
et parmi les macromères de formule Vb

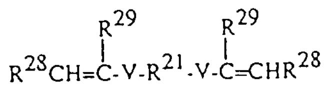

(Vb)

où $R^{28}$ et $R^{29}$ représentent, indépendamment l'un de l'autre, l'hydrogène ou le méthyle, V représente le reste bivalent $-R^{30}-R^{31}-NHCO-X^4-$ lié à $R^{21}$ par $X^4$ et où $R^{30}$ représente un phénylène ou un phénylène substitué par un alkyle inférieur, $R^{31}$ représente une liaison ou un alkylène inférieur et où $R^{21}$ et $X^4$ ont les significations indiquées précédemment.

**9.** Procédé selon la revendication 1, caractérisé en ce que le mélange des monomères contient les composants a) à f) dans les proportions suivantes:
a) 40 à 45 % en poids,
b) 5 à 10 % en poids,
c) 29 à 40 % en poids,
d) 3 à 15 % en poids,
e) 5 à 10 % en poids si présent,
f) 5 à 10% en poids si présent.

**10.** Procédé selon la revendication 1, caractérisé en ce que le mélange des monomères contient les composants a) à f) dans les proportions suivantes :
a) 35 à 40 % en poids
b) 5 à 10 % en poids,
c) 29 à 35 % en poids,
d) 3 à 10 % en poids,
e) 8 à 10 % en poids,
f) 8 à 10 % en poids.

**11.** Procédé selon la revendication 9 ou 10, caractérisé en ce que les composants a) à f) sont choisis parmi
- les composés de formule I où Ac représente l'acryloyle ou le méthacryloyle, $R^1$ représente un alkylène en $C_2$-$C_4$, n est égal à 0, $Z^2$ a la signification de $Z^1$ et $Z^1$ représente $OSi(R^4)_3$, $R^4$ étant un alkyle en $C_1$-$C_4$ ou OSi(alkyle en $C_1$-$C_4$)$_3$,
- les composés de formule II où $Q^2$ représente $Q^1$, n est égal à 0, Ac représente, en outre, l'acryloyle ou le méthacryloyle, $R^1$ représente un alkylène en $C_1$-$C_4$ et $Z^2$ un alkyle en $C_1$-$C_4$ ou $OSi(R^4)_3$, $R^4$ représentant un alkyle en $C_1$-$C_4$, les composés de formule IIIa où Ac représente l'acryloyle ou le méthacryloyle, $R^5$ représente un alkylène en $C_1$-$C_2$ et $R^6$ un alkyle en $C_1$-$C_4$ fluoré comportant au moins 3 atomes de fluor ou $R^5$ et $R^6$ représentent ensemble l'hexafluoroisopropyle,
- les composés de formule IIIb où Ac représente l'acryloyle ou le méthacryloyle, $R^5$ un alkylène en $C_1$-$C_2$ et $R^7$ un alkylène en $C_1$-$C_4$ fluoré,
- les composés de formule IIIc où Ac représente l'acryloyle ou le méthacryloyle et $R^8$ le phénylène,
- les composés de formule IIId où Ac représente l'acryloyle ou le méthacryloyle, p est égal à 1 et $R^9$ représente un alkyle en $C_5$-$C_7$ perfluoré et

- les composés de formule IIIe où $R^1$ représente le vinyle ou le 1-méthylvinyle, $R^{11}$ et $R^{13}$ représentent l'hydrogène et $R^{12}$ un alkyle en $C_1$-$C_4$ fluoré comportant au moins 3 atomes de fluor,
- les composés de formule IVa où Ac représente l'acryloyle ou le méthacryloyle et $R^{14}$ est le cyclohexyle substitué par un alkyle en $C_1$-$C_4$, un bi- ou tricycloalkyle en $C_7$-$C_{12}$ non substitué ou susbtitué par un alkyle en $C_1$-$C_4$, un bi- ou tricycloalkyl en $C_7$-$C_{12}$ alkyle en $C_1$-$C_4$ non substitué ou substitué par un alkyle en $C_1$-$C_4$ ou un alkyle en $C_1$-$C_4$ substitué par le tert-butyle,
- des (méth)acrylates d'alkyle en $C_2$-$C_4$ substitués par l'hydroxy, des N-vinyllactames ayant 5 à 7 chaînons, des (méth)acrylamides N,N-dialkyle en $C_1$-$C_4$ et des acides carboxyliques à insaturation vinylique comportant au total 3 à 5 atomes de carbone et
- les composés de formule Va, dérivés d'un polysiloxanediol ayant un poids moléculaire allant d'environ 400 à environ 8.000, tout d'abord fermé en bout de chaîne avec l'isophorone-diisocyanate ou le tolylène-2,4-diisocyanate, puis mis à réagir avec un composé hydroxylé choisi parmi les esters hydroxyalkyliques des acides acrylique, méthacrylique, maléique et fumarique, l'alkyle présentant 2 à 4 atomes de carbone et parmi les hydroxyalkylvinyléthers, l'alkyle présentant 2 à 4 atomes de carbone.

**12.** Lentille de contact essentiellement constituée d'un polymère selon la revendication 1.

**13.** Procédé pour la fabrication d'une lentille de contact selon la revendication 12 constituée d'un polymère selon la revendication 1 d'une façon connue en soi.

**14.** Utilisation d'un polymère selon la revendication 1 pour la fabrication d'une lentille de contact.